(19)

Europäisches
Patentamt
European
Patent Office
Office européen
des brevets

(11) **EP 3 165 580 B1**

(12) **EUROPEAN PATENT SPECIFICATION**

(45) Date of publication and mention
of the grant of the patent:
**06.03.2019 Bulletin 2019/10**

(21) Application number: **15814841.1**

(22) Date of filing: **29.06.2015**

(51) Int Cl.:
*C09D 127/16* (2006.01)    *C09D 5/03* (2006.01)

(86) International application number:
**PCT/JP2015/068710**

(87) International publication number:
**WO 2016/002725 (07.01.2016 Gazette 2016/01)**

(54) **COMPOSITION FOR POWDER COATING MATERIAL, POWDER COATING MATERIAL, AND COATED ARTICLE**

ZUSAMMENSETZUNG FÜR PULVERBESCHICHTUNGSMATERIAL, PULVERBESCHICHTUNGSMATERIAL UND BESCHICHTETER ARTIKEL

COMPOSITION DE MATÉRIAU DE REVÊTEMENT EN POUDRE, MATÉRIAU DE REVÊTEMENT EN POUDRE ET ARTICLE REVÊTU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.07.2014 JP 2014136305**

(43) Date of publication of application:
**10.05.2017 Bulletin 2017/19**

(73) Proprietor: **AGC Inc.**
**Tokyo 100-8405 (JP)**

(72) Inventors:
• **SAITO, Shun**
**Tokyo 100-8405 (JP)**
• **AIKAWA, Masataka**
**Tokyo 100-8405 (JP)**

(74) Representative: **Müller-Boré & Partner**
**Patentanwälte PartG mbB**
**Friedenheimer Brücke 21**
**80639 München (DE)**

(56) References cited:
EP-A1- 0 869 157    EP-A2- 0 960 918
WO-A1-2007/119850   WO-A1-2013/008885
WO-A1-2014/002964   GB-A- 2 262 100
GB-A- 2 262 100     JP-A- H08 512 174
US-A- 5 030 394     US-B1- 6 506 843

• DATABASE WPI Week 201109 Thomson Scientific, London, GB; AN 2011-A94228 XP002774690, & JP 2011 012119 A (DAINIPPON TORYO KK) 20 January 2011 (2011-01-20)
• J.WU ET AL.: 'Bis(perfluoro-2-n-propoxyethyl) diacyl peroxide initiated homopolymerization of vinylidene fluoride (VDF) and copolymerization with perfluoro-n- propylvinylether (PPVE' POLYMER vol. 55, no. 16, 26 June 2014, pages 3557 - 3563, XP029013885

**Description**

The present invention relates to a composition for powder coating material, a powder coating material and a coated article.

In recent years, global scale environmental destruction problems such as global warming, ozone layer depletion, acid rain, etc. have gained prominent attention. Internationally, environmental pollution measures are advocated, and various regulations have been established from the viewpoint of environmental protection. Among them, release into the atmosphere of organic solvents (VOC) has been a serious problem, and also in each industry, the movement for de-organic solvents (de-VOC) along with the trend for strengthening VOC regulations has become active. Also in the paint industry, as a substitute for conventional organic solvent-based coating material, a powder coating material is highly expected as a coating material which contains no VOC and which is friendly to the environment as it can be recovered and reused without requiring exhaust treatment or wastewater treatment.

As such a powder coating material, an acrylic resin powder coating material, a polyester resin powder coating material or an epoxy resin powder coating material, is mainly used. However, coating films formed by using these powder coating materials have such a drawback that they are poor in weather resistance.

As a powder coating material which is excellent in weather resistance, a fluororesin-type powder coating material using a fluororesin has also been developed.

As the fluororesin-type powder coating material, for example, the following powder coating material has been proposed.

(1) A powder coating material obtained by dry blending a powder of a polyvinylidene fluoride copolymer having a melting point of at most 150°C, a crystallinity of at most 35% and a mass average molecular weight of from $1 \times 10^4$ to $5 \times 10^5$, and a powder of a methyl methacrylate copolymer having a glass transition temperature of at most 110°C and a mass average molecular weight of from $1 \times 10^4$ to $5 \times 10^5$; or a powder coating material obtained by seed-polymerizing a monomer capable of forming the methyl methacrylate copolymer in an aqueous dispersion of the vinylidene fluoride copolymer, and spray drying the obtained aqueous dispersion (Patent Document 1).

Patent Document 1: JP 9-165535 A, which is also published as EP 0 869 157 A1.

Further, GB 2 262 100 A discloses a fluoropolymer-containing powder obtained by mixing a fluoropolymer, i.e. a polyvinylidene fluoride, and a methyl methacrylate homo- or copolymer which, in the proportions used, is compatible with the fluoropolymer in the melt, obtaining from the mixture a particulate solid mass in which the fluoropolymer has a degree of crystallinity of at least 85%, and grinding the particulate solid mass. US 5 030 394 A discloses a process for preparing pigmented polyvinylidene fluoride-based powder coating products, comprising the steps of (i) mixing polyvinylidene fluoride resin with at least one compatible thermoplastic resin and at least one pigment, (ii) pelletizing the resulting mixture of (i), and (iii) cryogenically grinding the pellets of (ii) while sieving out the larger particles. EP 0 960 918 A2 discloses a coating composition exhibiting enhanced properties, including solvent resistance and gloss retention, comprising a homopolymer of vinylidene fluoride and a homopolymer of methyl methacrylate, wherein the polymethyl methacrylate has a molecular weight in the range of about 25,000 grams per mole to about 200,000 grams per mole. US 6 506 843 B1 discloses a thermosetting powder coating composition comprising a powder having an average particle size of 1 to 100 μm, prepared by dry-blending a composite resin including a vinylidene fluoride polymer having a crosslinkable functional group and a methyl methacrylate polymer with a curing agent, said composite resin having a melt flow rate of 1 to 1,000 g/10 minutes when measuring at 130°C at a load of 2.1 kg, and then pulverizing while maintaining the pulverizing system at 5 to 45°C with cooling. JP 2011 012119 A discloses a powder coating which is obtained by melting/kneading a mixture containing (A) 10-50 parts by mass of a fluororesin, (B) 10-90 parts by mass of a polyester resin and (C) 10-50 parts by mass of a pigment, and pulverizing it after cooling. WO 2014/002964 A1 discloses a powder coating composition which comprises a fluorinated resin (A), a polyester polymer (B), a curing agent (C) and an ultraviolet absorber (D), wherein the polyester polymer (B) is a polyester polymer comprising units derived from a C8-15 aromatic polybasic carboxylic acid compound and units derived from a C2-10 polyhydric alcohol compound. WO 2007/119850 A1 discloses a porous film comprising a polymer component having a polyvinylidene fluoride resin as a main component thereof, wherein the degree of crystallization of the polyvinylidene fluoride resin is 50% or more but not more than 90%. WO 2013/008885 A1 discloses a vinylidene fluoride resin composition, at least comprising a vinylidene fluoride resin and an antioxidant, wherein the vinylidene fluoride resin has a peak value ratio of head-to-tail bond to head-to-head bond (head-to-tail bond /head-to-head bond), as determined by $^1$H-NMR, of 11.5 or less and a mass-average molecular weight (Mw) of $1.30 \times 10^5$ or more. JP 8-512174 A discloses a conductive polymer composition which has a specific resistivity and which comprises a polymeric component and a particulate conductive filler. J. Wu et al., Polymer, Vol. 55 (2014), No. 16, pp. 3557-3563, discloses bis(perfluoro-2-n-propoxyethyl)diacyl peroxide initiated homopolymerization of vinylidene fluoride and copolymerization with perfluoro-n-propylvinylether.

Patent Document 1 discloses that according to the powder coating material of (1), it is possible to form a coating film excellent in weather resistance and flex resistance (bending processability).

However, according to findings by the present inventors, even a coating film formed from the powder coating material of (1) is not one which fully satisfies bending processability. For example, if an aluminum plate having a coating film formed from the powder coating material, is processed by bending, rupture in the coating film at the bent portion, or peeling off from the aluminum plate is sometimes observed.

It is an object of the present invention to provide a composition for powder coating material capable of obtaining a powder coating material capable of forming a coating film excellent in weather resistance and bending processability; a powder coating material capable of forming a coating film excellent in weather resistance and bending processability; and a coated article having a coating film excellent in weather resistance and bending processability on its surface.

The present invention provides a composition for powder coating material, a powder coating material and a coated article, having the following constructions [1] to [10].

[1] A composition for powder coating material comprising the following polyvinylidene fluoride (A) and at least one resin (B) selected from the group consisting of an acrylic resin, a polyester resin and an epoxy resin, wherein the content of the following polyvinylidene fluoride (A) is from 30 to 90 parts by mass in the total of 100 parts by mass of the polyvinylidene fluoride (A) and the resin (B):

Polyvinylidene fluoride (A): a polyvinylidene fluoride, which is a homopolymer of vinylidene fluoride, and having a melting point of from 152 to 170°C, a crystallinity of from 10 to 35%, wherein the difference between crystallinity during quenching and crystallinity during annealing is at most 3%, as determined by the following method, and a heterologous sequence ratio of from 11 to 37% as determined by the following method:

(Method for determining heterologous sequence ratio)

$^{19}$F-NMR of the polyvinylidene fluoride is measured by using deuterated N,N-dimethylformamide as a solvent and CFCl$_3$ as an internal standard, to obtain a spectrum, and the heterologous sequence ratio is calculated by the following formula (1) from the integral value ($I_1$) of signals derived from regular sequence appearing in the vicinity of -85 to -98 ppm in the obtained spectrum and the integral value ($I_2$) of signals derived from heterologous sequence appearing in the vicinity of -113 to -120 ppm in the spectrum:

$$\text{Heterologous sequence ratio (\%)} = \{I_2/(I_1 + I_2)\} \times 100 \qquad (1)$$

(Method for determining crystallinity)

the crystallinity of the polyvinylidene fluoride is calculated by the following formula (2) from the heat of fusion $M_1$ (J/g) and heat of fusion $M_2$ of a perfect crystal of polyvinylidene fluoride, wherein the heat of fusion $M_1$ is calculated from an area of the endothermic peak of a chart obtained by measuring the heat balance in a temperature range of from -25 to 200°C at a temperature raising rate of 10°C/min using a differential scanning calorimeter and the amount of the sample, and wherein the heat of fusion $M_2$ is 104.5 J/g:

$$\text{Crystallinity (\%)} = (M_1/M_2) \times 100 \qquad (2)$$

wherein for the crystallinity during quenching, the sample is completely dissolved at 300°C, then cooled from 300°C to room temperature at a cooling rate of 10°C/min for re-crystallization, and then heated from room temperature to 200°C at a temperature raising rate of 10°C /min, and wherein the crystallinity during annealing is calculated in the same manner as the crystallinity during quenching, except that the cooling rate as a re-crystallization condition is changed to 0.5°C/min.

[2] The composition for powder coating material according to [1], wherein resin components contained in the composition for powder coating material consist solely of the polyvinylidene fluoride (A) and the resin (B).

[3] The composition for powder coating material according to [1] or [2], which further contains a pigment.

[4] A powder coating material comprising a powder composed of the composition for powder coating material as defined in any one of [1] to [3].

[5] A powder coating material comprising a first powder composed of the composition for powder coating material as defined in any one of [1] to [3], and a second powder composed of a composition for powder coating material which contains at least one resin (C) selected from the group consisting of an acrylic resin, a polyester resin, an urethane resin, an epoxy resin and a silicone resin and which contains no fluororesin.

[6] The powder coating material according to [5], wherein the mixing ratio of the first powder to the second powder (i.e. the first powder/the second powder) is from 10/90 to 90/10 (mass ratio).

[7] A coated article having a coating film formed of the powder coating material as defined in any one of [4] to [6], on the surface of a substrate.

[8] The coated article according to [7], wherein the material for the substrate is aluminum or aluminum alloy having surface-treated with a chemical conversion treatment agent.

[9] The coated article according to [8], wherein the chemical conversion treatment agent is a zirconium-type treatment agent or a titanium-type treatment agent, which does not contain chromium.

[10] The coated article according to [7], which further has, between the surface of the substrate and the coating film formed of the powder coating material, a primer layer composed of at least one primer selected from the group consisting of an acrylic resin, a polyester resin and an epoxy resin.

According to the composition for powder coating material of the present invention, it is possible to obtain a powder coating material capable of forming a coating film excellent in weather resistance and bending processability.

According to the powder coating material of the present invention, it is possible to form a coating film excellent in weather resistance and bending processability.

The coated article of the present invention has a coating film excellent in weather resistance and bending processability on its surface.

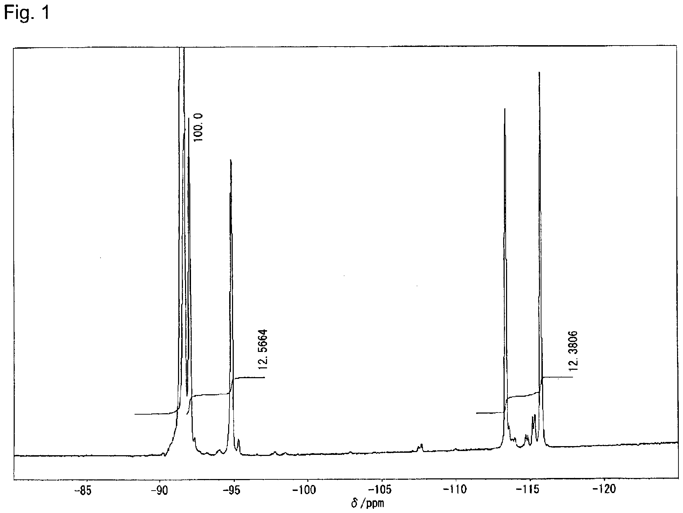

Fig. 1 is a chart showing an example of a $^{19}$F-NMR spectrum of polyvinylidene fluoride.

The following definitions of terms apply throughout the specification and claims.

In polyvinylidene fluoride, a portion ($-CF_2CH_2-CF_2CH_2-$) where $CF_2$ and $CH_2$ are regularly alternately bonded, is referred to as "regular sequence", while a portion ($-CH_2CF_2-CF_2CH_2-$) where adjacent $CF_2$ are bonded to each other, is referred to as "heterologous sequence". The heterologous sequence ratio can be obtained from $^{19}$F-NMR, and specifically, $^{19}$F-NMR of polyvinylidene fluoride is measured by using deuterated N,N-dimethylformamide (hereinafter referred to also as deuterated DMF) as a solvent and $CFCl_3$ as an internal standard, to obtain a spectrum as shown in Fig. 1, and the heterologous sequence ratio is calculated by the following formula (1) from the integral value ($I_1$) of signals derived from regular sequence appearing in the vicinity of -85 to -98 ppm in the obtained spectrum and the integral value ($I_2$) of signals derived from heterologous sequence appearing in the vicinity of -113 to -120 ppm in the spectrum:

$$\text{Heterologous sequence ratio (\%)} = \{I_2/(I_1 + I_2)\} \times 100 \qquad (1)$$

A "fluororesin" is meant for a polymer compound having fluorine atoms in the molecule.

A "melting point" of a resin is meant for the temperature at the melting peak as measured by a differential scanning calorimetry (DSC) method.

A "glass transition temperature" of a resin is meant for the mid-point glass transition temperature measured by a differential scanning calorimetry (DSC) method.

A "dry blend" is meant for mixing two or more powders without melting the powders, and without addition of a solvent.

A "molten film" is meant for a film made of a melt of a powder coating material formed by applying the powder coating material.

A "coating film" is meant for a film formed by cooling a molten film and, in some cases, by curing.

A "unit" is meant for a moiety derived from a monomer, which is present in a polymer and which constitutes the polymer. Further, one having the structure of a certain unit chemically converted after polymer formation may also be referred to as a unit.

Hereinafter, as the case requires, units derived from an individual monomer may be called by a name having "units" attached to the monomer name.

[Composition for powder coating material]

The composition for powder coating material of the present invention is a composition for powder coating material (hereinafter referred to also as composition ($\alpha$)) comprising polyvinylidene fluoride (A) (hereinafter referred to also as PVDF (A)) and at least one resin (B) selected from the group consisting of an acrylic resin, a polyester resin and an epoxy resin, wherein the content of PVDF (A) is from 30 to 90 parts by mass in the total of 100 parts by mass of PVDF (A) and the resin (B).

Composition ($\alpha$) may contain, as the case requires, a pigment, a curing agent, a curing catalyst and other components (hereinafter these may collectively be referred to as "additives").

By using composition (α), it is possible to produce a first powder. The first powder may be used as it is, as the after-described powder coating material (I), or may be used for the after-described powder coating material (II) having the first powder and the after-described second powder mixed.

Hereinafter, the first powder of the present invention may be referred to also as powder (X), and the second powder of the present invention may be referred to also as powder (Y).

(PVDF (A))

PVDF (A) is a PVDF having a melting point of from 152 to 170°C and a heterologous sequence ratio of from 11 to 37%.

PVDF (A) is a homopolymer of vinylidene fluoride (hereinafter referred to also as VDF).

The heterologous sequence ratio of PVDF (A) is from 11 to 37%, more preferably from 11 to 35%, further preferably from 13 to 33%, particularly preferably from 15 to 30%. The ratio of heterologous sequence ($-CH_2CF_2-CF_2CH_2-$) of PVDF (A) being high, means that regularity of the molecular chain is reduced, and PVDF (A) is excellent in flexibility and adhesion to a substrate. Therefore, when the heterologous sequence ratio of PVDF (A) is at least the above lower limit value, rupture or peeling of the coating film from the substrate is less likely to occur when the coated article is processed by bending, and the coating film is excellent in bending processability. On the other hand, the ratio of the heterologous sequence of PVDF (A) being high, means that the ratio of a moiety ($-CF_2CH_2-CH_2CF_2-$) where adjacent $CH_2$ are bonded to each other, also increases. The moiety where adjacent $CH_2$ are bonded to each other is likely to be degraded by ultraviolet light. Thus, when the heterologous sequence ratio of PVDF (A) is at most the upper limit value, the coating film will be excellent in weather resistance.

The melting point of PVDF (A) is from 152 to 170°C, particularly preferably from 152 to 160°C. When the melting point of the PVDF (A) is at least the above lower limit value, composition (α) can be pulverized at the time of forming powder (X) by pulverizing composition (α). When the melting point of PVDF (A) is at most the upper limit value, the coating film will be excellent in bending processability and adhesion to a substrate. Further, dispersibility of a pigment into composition (α) will be excellent, and as a result, the coating film will be further excellent in weather resistance. Further, composition (α) can be melt-kneaded at a low temperature, whereby it is possible to suppress deterioration of the resin (B), and as a result, yellowing of the coating film can be suppressed, and the coating film will be excellent in appearance.

The number average molecular weight (Mn) of PVDF (A) is preferably from 50,000 to 400,000, particularly preferably from 100,000 to 300,000. When the number average molecular weight of PVDF (A) is within the above range, the coating film will be less likely to break, and adhesion of the coating film to a substrate will be excellent, and as a result, the coating film will be further excellent in bending processability. When the number average molecular weight of PVDF (A) is at least the above lower limit value, it is easy to pulverize composition (α) at the time of forming powder (X) by pulverizing composition (α). When the number average molecular weight of PVDF (A) is at most the upper limit value, composition (α) can be melt-kneaded at a low temperature, whereby deterioration of the resin (B) can be suppressed, and as a result, yellowing of the coating film can be suppressed, and the coating film will be excellent in appearance.

The mass average molecular weight (Mw) of PVDF (A) is preferably from 100,000 to 500,000, particularly preferably from 150,000 to 400,000. When the mass average molecular weight of PVDF (A) is within the above range, the coating film will be less likely to break, and adhesion of the coating film to a substrate will be excellent, and as a result, the coating film will be further excellent in bending processability. When the mass average molecular weight of PVDF (A) is at least the above lower limit value, it is easy to pulverize composition (α) at the time of forming powder (X) by pulverizing composition (α). When the mass average molecular weight of PVDF (A) is at most the upper limit value, composition (α) can be melt-kneaded at a low temperature, whereby deterioration of the resin (B) can be suppressed, and as a result, yellowing of the coating film can be suppressed, and the coating film will be excellent in appearance.

The molecular weight distribution (Mw/Mn) of PVDF (A) is preferably from 1 to 3, particularly preferably from 1.2 to 2.5. When the molecular weight distribution of PVDF (A) is within the above range, the melt viscosity of PVDF (A) can be adjusted to be low, whereby dispersibility of a pigment during melt-kneading will be excellent. When the number average molecular weight, the mass average molecular weight and the molecular weight distribution of PVDF (A) are within the above ranges, it is easy to adjust the melting point of PVDF (A) to be within the above range.

The melt viscosity of PVDF (A) is preferably 1,000 to 5,000 Pa·s, particularly preferably from 1,500 to 4,000 Pa·s, at a kneading temperature of from 190 to 200°C. It is difficult to produce PVDF (A) having a melt viscosity lower than the above lower limit value. When the melt viscosity of PVDF (A) is at most the upper limit value, dispersibility of a pigment, adhesion to the substrate and smoothness of the coating film, will be excellent.

The melt viscosity of PVDF (A) is measured by using a rotary rheometer under a temperature-raising condition of 10°C/min.

The crystallinity of PVDF (A) is from 10 to 35%, particularly preferably from 12 or 30%. When the crystallinity of PVDF (A) is at least the above lower limit value, the chemical resistance and heat resistance of the coating film will be excellent. When the crystallinity of PVDF (A) is at most the upper limit value, at the time of processing (e.g. bending, etc.) a coated article, it is possible to suppress color change (whitening) of the coating film at the processed portion.

For the crystallinity of PVDF (A), using EXSTAR DSC7020 (manufactured by SII Nano Technology Co., Ltd.), with respect to 10 mg of a sample, the heat balance is measured in a temperature range of from -25 to 200°C at a temperature raising rate of 10°C/min and heat of fusion $M_1$ (J/g) is calculated from the area of the endothermic peak of the obtained chart and the amount of the sample, whereupon the crystallinity is calculated by the following formula (2) from $M_1$ and heat of fusion $M_2$ of perfect crystal of PVDF (literature value: 104.5 J/g, as disclosed in EXPRESS Polymer Letters, Vol. 4, No. 5, 2010, p. 284-291).

$$\text{Crystallinity (\%)} = (M_1/M_2) \times 100 \quad (2)$$

The difference between crystallinity during quenching and crystallinity during annealing (|during annealing - during quenching|) of PVDF (A) is at most 3%, preferably at most 2.5%. When the difference in crystallinity is at most the upper limit value, it is possible to form a coating film of the same appearance regardless of the conditions for cooling the molten film in actual coating.

For the crystallinity during quenching, a sample is completely dissolved at 300°C, then cooled from 300°C to room temperature at a cooling rate of 10°C/min for re-crystallization, then by differential scanning calorimetry, 10 mg of the recrystallized sample is heated from room temperature to 200°C at a temperature raising rate of 10°C /min, and heat of fusion $M_1$ (J/g) is calculated from the area of the endothermic peak of the obtained chart and the amount of the sample, whereupon the crystallinity during quenching is calculated by the above formula (2) from $M_1$ and heat of fusion $M_2$ of complete crystal of PVDF (literature value: 104.5 J/g, as disclosed in EXPRESS Polymer Letters, Vol. 4, No. 5, 2010 , p. 284-291).

The crystallinity during annealing is calculated in the same manner as the crystallinity during quenching, except that the cooling rate as a re-crystallization condition is changed to 0.5°C/min.

PVDF (A) can be prepared by polymerizing VDF by a known polymerization method. As the polymerization method, an emulsion polymerization method or a suspension polymerization method may, for example, be mentioned, and emulsion polymerization method is preferred, since it is thereby easy to control the heterogeneous sequence ratio of PVDF (A) to be within the above-mentioned range.

As a method of controlling the heterologous sequence ratio of PVDF (A) to be within the above range, a method may be mentioned wherein (i) by adopting an emulsion polymerization method as the polymerization method of VDF, (ii) the type of a polymerization initiator is selected, the amount of the polymerization initiator to be added is adjusted, the timing for addition of the polymerization initiator is selected, and the polymerization temperature is controlled.

(i) As the emulsifier, a fluorinated surfactant or a nonionic non-fluorinated surfactant is preferred, since VDF will be thereby easily emulsified, and it becomes easy to control the particle size of PVDF (A).

The fluorinated surfactant may, for example, be one type of or a mixture of two or more types of a compound having surface activity and having fluorine atoms in the structure thereof. Specifically, an acid represented by $X(CF_2)_nCOOH$ (where n is an integer of from 6 to 20, and X is F or H) or its alkali metal salt, ammonium salt, amine salts or quaternary ammonium salt; an acid represented by $Y(CH_2CF_2)_mCOOH$ (where m is an integer of from 6 to 13, and Y is F or Cl) or its alkali metal salt, ammonium salt, amine salt or quaternary ammonium salt; or an acid represented by $Z(CF_2OCF_2)_pCOOH$ (where p is an integer of from 1 to 10, and Z is F, Cl, H or $CF_3$) or its alkali metal salt, ammonium salt, amine salt or quaternary ammonium salt, may be mentioned.

The nonionic non-fluorinated surfactant may, for example, be a polyoxyethylene alkyl ether, a polyoxyethylene alkyl phenyl ether, a polyoxyethylene alkyl ester, a sorbitan alkyl ester, a polyoxyethylene sorbitan alkyl ester, a glycerin ester, or a derivative thereof.

By selecting a preferred one from the above as the emulsifier and by adjusting its amount to be from 0.05 to 10 parts by mass per 100 parts by mass of VDF, it is possible to control the heterologous sequence ratio of PVDF (A) to be within the above range.

(ii) The polymerization initiator may, for example, be a water-soluble polymerization initiator such as a persulfate or hydrogen peroxide, diisopropyl peroxydicarbonate (IPP), benzoyl peroxide, dibutyl peroxide or azobisisobutyronitrile (AIBN).

By selecting a preferred one from the above as the polymerization initiator, by adjusting its amount to be from 0.05 to 5 parts by mass per 100 parts by mass of VDF, by selecting the timing for addition of the polymerization initiator to be a continuous addition, and by adjusting the polymerization temperature to be from 40 to 90°C, it is possible to bring generation of radical species to be constant, thereby to suppress an increase in the heterogeneous sequence ratio of PVDF (A) due to excessive feeding of radical species and to control the heterogeneous sequence ratio to be within the above range.

(Resin (B))

The resin (B) is at least one member selected from the group consisting of an acrylic resin, a polyester resin and an epoxy resin. The acrylic resin and polyester resin may be thermoplastic or thermosetting.

The melt viscosity of the resin (B) is preferably from 10 to 1,000 Pa·s, particularly preferably from 50 to 500 Pa·s at a kneading temperature of from 190 to 200°C. If the melt viscosity of the resin (B) is less than the above lower limit value, the difference from the melt viscosity of the PVDF (A) becomes too large, and melt kneading with PVDF (A) tends to be insufficient. When the melt viscosity of the resin (B) is at most the upper limit value, it covers the high melt viscosity of the PVDF (A) and sufficiently lowers the melt viscosity of the entire composition for powder coating material, whereby dispersibility of a pigment, adhesion to the substrate and smoothness of the coating film will be excellent.

The melt viscosity of the resin (B) is measured by using a rotary rheometer under a temperature raising condition of 10°C /min.

<Acrylic resin>

An acrylic resin is a polymer having units derived from an acrylate or methacrylate. In a case where powder (X) is to be used as a thermosetting powder coating material, it may have a reactive group capable of reacting with a curing agent, such as a carboxy group, a hydroxy group or a sulfo group.

The acrylic resin is preferably a MMA copolymer comprising methyl methacrylate (hereinafter referred to also as MMA) units and units derived from a monomer other than MMA, since the glass transition temperature can thereby be easily adjusted to be within the range which will be described later.

The monomer other than MMA may, for example, be an alkyl acrylate, an alkyl methacrylate (excluding MMA), a hydroxyalkyl acrylate, a hydroxyalkyl methacrylate, acrylic acid, methacrylic acid, acrylamide, methacrylamide, glycidyl methacrylate, glycidyl acrylate or 3-trimethoxysilylpropyl methacrylate, and from the viewpoint of dispersibility of a pigment, adhesion to the substrate, and easy pulverization of pellets after the production of a powder coating material, ethyl methacrylate (hereinafter referred to also as EMA) is preferred.

The proportion of MMA units is preferably from 50 to 90 mol%, particularly preferably from 55 to 85 mol%, in 100 mol% of all monomer units. When the proportion of MMA units is at least the above lower limit value, it is easy to pulverize the composition at the time of forming a powder by pulverizing the composition. Further, stickiness is less at the time of melt-kneading the composition. Further, blocking of the powder can be suppressed. When the proportion of MMA units is at most the above upper limit value, the molten film will be excellent in wettability to the substrate, and as a result, the coating film will be excellent in adhesion to the substrate. Further, the melt viscosity of the composition during melt-kneading will be low, whereby dispersibility of a pigment in the composition will be excellent, and as a result, the coating film will be further excellent in weather resistance. Further, the melt viscosity of the molten film at the time of coating is lowered, whereby bubble releasing is facilitated, and the coating film will be excellent in adhesion to the substrate.

The glass transition temperature of the acrylic resin is preferably from 20 to 100°C, particularly preferably from 40 to 90°C. When the glass transition temperature of the acrylic resin is at least the above lower limit value, it is easy to pulverize the composition at the time of forming a powder by pulverizing the composition. Further, stickiness is less at the time of melt-kneading the composition. Further, blocking of the powder can be suppressed. When the glass transition temperature of the acrylic resin is at most the upper limit value, the molten film will be excellent in wettability to the substrate, and as a result, the coating film will be excellent in adhesion to the substrate. Further, the melt viscosity of the composition during melt-kneading will be low, whereby dispersibility of a pigment in the composition will be excellent, and as a result, the coating film will be further excellent in weather resistance. Further, the melt viscosity of the molten film at the time of coating will be low, whereby bubble releasing will be facilitated, and the coating film will be excellent in adhesion to the substrate.

The number average molecular weight (Mn) of the acrylic resin is preferably from 20,000 to 100,000, particularly preferably from 30,000 to 90,000. When the number average molecular weight of the acrylic resin is at least the above lower limit value, it is easy to pulverize the composition at the time of forming a powder by pulverizing the composition. Further, stickiness is less at the time of melt-kneading the composition. Further, blocking of the powder can be suppressed. When the number average molecular weight of the acrylic resin is at most the upper limit value, the molten film will be excellent in wettability to the substrate, and as a result, the coating film will be excellent in adhesion to the substrate. Further, the melt viscosity of the composition at the time of melt-kneading will be low, whereby dispersibility of a pigment in the composition will be excellent, and as a result, the coating film will be further excellent in weather resistance.

Further, the melt viscosity of the molten film will be low at the time of coating, whereby bubble releasing will be facilitated, and the coating film will be excellent in adhesion to the substrate.

The mass average molecular weight (Mw) of the acrylic resin is preferably from 30,000 to 200,000, particularly preferably from 40,000 to 150,000. When the mass average molecular weight of the acrylic resin is at least the above lower limit value, it is easy to pulverize the composition at the time of forming a powder by pulverizing the composition. Further, stickiness is less at the time of melt-kneading the composition. Further, blocking of the powder can be suppressed. When the mass average molecular weight of the acrylic resin is at most the upper limit value, the molten film will be excellent in wettability to the substrate, and as a result, the coating film will be excellent in adhesion to the substrate. Further, the melt viscosity of the composition at the time of melt-kneading will be low, whereby dispersibility of a pigment in the composition will be excellent, and as a result, the coating film will be further excellent in weather resistance. Further, the melt viscosity of the molten film will be low at the time of coating, whereby bubble releasing will be facilitated, and the coating film will be excellent in adhesion to the substrate.

The molecular weight distribution (Mw/Mn) of the acrylic resin is preferably from 1 to 4, particularly preferably from 1.2 to 3. When the molecular weight distribution of the acrylic resin is within the above range, the melt viscosity at the temperature (usually from 110 to 210°C) in the step (a) of melt kneading the respective components to obtain a kneaded material consisting of composition (α), which will be described later, becomes low, whereby dispersibility of a pigment, adhesion to the substrate and smoothness of the coating film will be excellent. Further, when the number average molecular weight, the mass average molecular weight and the molecular weight distribution of the acrylic resin are within the above ranges, it is easy to adjust the glass transition temperature of the acrylic resin to be within the above range.

<Polyester Resin>

The polyester resin may be one having units derived from a polycarboxylic acid compound and units derived from a polyhydric alcohol compound, and if necessary, having units other than these two types of units (for example, units derived from a hydroxy carboxylic acid compound).

The polycarboxylic acid compound may, for example, be phthalic acid, isophthalic acid, terephthalic acid, naphthalene dicarboxylic acid, trimellitic acid, pyromellitic acid, phthalic anhydride, or the like, and isophthalic acid is preferred, since the cured film will be excellent in weather resistance.

The polyhydric alcohol compound is preferably an aliphatic polyhydric alcohol or an alicyclic polyhydric alcohol, more preferably an aliphatic polyhydric alcohol, from the viewpoint of excellent adhesion to the substrate and flexibility of the cured film.

As the polyhydric alcohol compound, ethylene glycol, diethylene glycol, triethylene glycol, 1,2-propanediol, 1,3-propanediol, 1,3-butanediol, 1,4-butanediol, 1,2-pentanediol, 1,5-pentanediol, neopentyl glycol, spiro glycol, 1,10-decanediol, 1,4-cyclohexanedimethanol, trimethylolethane, trimethylolpropane, glycerol or pentaerythritol may, for example, be mentioned.

As the polyhydric alcohol, neopentyl glycol, 1,2-pentanediol, 1,5-pentanediol, or trimethylolpropane, is preferred, and in view of easy availability, neopentyl glycol or trimethylolpropane, is particularly preferred.

As commercial products of the polyester resin, "CRYLCOAT (registered trademark) 4642-3" and "CRYLCOAT (registered trademark) 4890-0", manufactured by DAICEL-ALLNEX LTD., and "GV-250", "GV- 740 " and "GV-175", manufactured by Japan U-Pica Company Ltd. may, for example, be mentioned.

<Epoxy resin>

The epoxy resin may, for example, be a bisphenol A-type epoxy resin, a bisphenol F-type epoxy resin, or a 1,2-epoxy-4-(2-oxiranyl)cyclohexane adduct of 2,2-bis(hydroxymethyl)-1-butanol.

As commercial products of the epoxy resin, "Epikote (registered trademark) 1001", "Epikote (registered trademark) 1002" and "Epikote (registered trademark) 4004P", manufactured by Mitsubishi Chemical Corporation, "Epiclon (registered trademark) 1050" and "Epiclon (registered trademark) 3050", manufactured by DIC Corporation, "EPOTOHTO (registered trademark) YD-012" and "EPOTOHTO (registered trademark) YD-014", manufactured by NIPPON STEEL & SUMIKIN CHEMICAL CO., LTD., "Denacol (registered trademark) EX-711", manufactured by Nagase ChemteX Corporation, and "EHPE3150", manufactured by Daicel Chemical Industries, Ltd. may, for example, be mentioned.

(Pigment)

Composition (α) preferably contains a pigment.

As the pigment, at least one member selected from the group consisting of a luster pigment, an anticorrosive pigment, a coloring pigment and an extender pigment is preferred.

A luster pigment is a pigment to present a luster to the coating film. As the luster pigment, aluminum powder, nickel powder, stainless steel powder, copper powder, bronze powder, gold powder, silver powder, mica powder, graphite powder, glass flakes, a scale-like iron oxide powder or the like, may be mentioned.

An anticorrosive pigment is a pigment for a substrate which requires corrosion resistance i.e. to prevent corrosion or deterioration of the substrate. As the anticorrosive pigment, a lead-free anticorrosive pigment presenting little impact on the environment is preferred. As the lead-free anticorrosive pigment, zinc cyanamide, zinc oxide, zinc phosphate, calcium magnesium phosphate, zinc molybdate, barium borate or zinc calcium cyanamide, may, for example, be mentioned.

A coloring pigment is a pigment to color the coating film. As the coloring pigment, titanium oxide, carbon black, iron oxide, phthalocyanine blue, phthalocyanine green, quinacridone, isoindolinone, benzimidazolone, a dioxazine, etc. may be mentioned.

An extender pigment is a pigment to improve hardness of the coating film and to increase the thickness of the coating film. Further, it is preferably incorporated, since it is possible to make the cut surface of the coating film clean, when the substrate is cut. The extender pigment may, for example, be talc, barium sulfate, mica, calcium carbonate, etc.

The titanium oxide is preferably one having surface treatment applied so that a photocatalytic reaction is less likely to proceed, and specifically, it is preferably titanium oxide surface-treated with e.g. silica, alumina, zirconia, selenium or an organic component (polyol), particularly preferably titanium oxide having the titanium oxide content adjusted to be from 83 to 90 mass% by such surface treatment. When the content of titanium oxide is at least the above lower limit value, the coating film will be excellent in whiteness. When the content of titanium oxide is at most the above upper limit value, the coating film is less likely to deteriorate.

As commercial products of such titanium oxide, "Tipaque (registered trademark) PFC105" (titanium oxide content: 87 mass%) and "Tipaque (registered trademark) CR95" (titanium oxide content: 90 mass%), manufactured by Ishihara Sangyo Kaisha, Ltd., "D918" (titanium oxide content: 85 mass%), manufactured by Sakai Chemical Industry Co., Ltd. "Ti-Pure (registered trademark) R960" (titanium oxide content: 89 mass%) and "Ti-Select (registered trademark)" (titanium oxide content: 90 mass%), manufactured by DuPont, etc. may be mentioned.

(Curing agent)

In a case where powder (X) is to be used as a thermosetting powder coating material, composition ($\alpha$) may contain a curing agent.

The curing agent is a compound to cure a resin by reacting with a reactive group of the resin (resin (B), etc.) to cross-link the resin or to increase the molecular weight of the resin. The curing agent has at least two reactive groups capable of reacting with a reactive group (a hydroxy group, a carboxy group, etc.) of the resin. As the reactive groups of the curing agent, ones reactive with a reactive group of the resin at ordinary temperature are undesirable, and therefore, they are preferably reactive groups capable of reacting at the time when the powder coating material is heated and melted. For example, blocked isocyanate groups are preferred to isocyanate groups having high reactivity at ordinary temperature. When the powder coating material is heated and melted, blocked isocyanate groups become isocyanate groups, as the blocking agent is detached, and the isocyanate groups act as reactive groups.

As the curing agent, it is possible to use a known compound, for example, a blocked isocyanate-type curing agent, an amine-type curing agent (melamine resin, guanamine resin, sulfonamide resin, urea resin, aniline resin, etc.), a $\beta$-hydroxyalkyl amide-type curing agent, or a triglycidyl isocyanurate-type curing agent. A blocked isocyanate-type curing agent is particularly preferred, since adhesion to the substrate, processability of the product after coating, and water resistance of the coating film, will be excellent.

Curing agents may be used alone, or may be used in combination of two or more of them.

The softening temperature of the curing agent is preferably from 10 to 120°C, particularly preferably from 40 to 100°C. When the softening temperature is at least the above lower limit value, the powder coating material is hardly curable at room temperature, and particulate agglomerates are less likely to be formed. When the softening temperature is at most the above upper limit value, it is easy to uniformly disperse the curing agent in the powder at the time of forming the powder by melt-kneading the composition, and the resulting coating film will be excellent in surface smoothness, strength and moisture resistance.

The blocked isocyanate-type curing agent is preferably a solid one at room temperature.

The blocked isocyanate-type curing agent is preferably one produced by reacting a polyisocyanate obtained by reacting an aliphatic, aromatic or araliphatic diisocyanate with a low molecular weight compound having active hydrogen, with a blocking agent for masking.

As the diisocyanate, tolylene diisocyanate, 4,4'-diphenylmethane diisocyanate, xylylene diisocyanate, hexamethylene diisocyanate, 4,4'-methylenebis(cyclohexyl isocyanate), methylcyclohexane diisocyanate, bis(isocyanatomethyl)cyclohexane, isophorone diisocyanate, dimer acid diisocyanate, lysine diisocyanate, etc., may be mentioned.

As the low molecular compound having active hydrogen, water, ethylene glycol, propylene glycol, trimethylolpropane, glycerin, sorbitol, ethylenediamine, ethanolamine, diethanolamine, hexamethylenediamine, isocyanurate, uretdione, a low molecular weight polyester containing hydroxy groups, polycaprolactone, etc., may be mentioned.

As the blocking agent, alcohols (methanol, ethanol, benzyl alcohol, etc.), phenols (phenol, cresol etc.), lactams (caprolactam, butyrolactam, etc.), oximes (cyclohexanone, oxime, methyl ethyl ketoxime, etc.), etc. may be mentioned.

(Curing catalyst)

In a case where powder (X) is to be used as a thermosetting powder coating material, composition (α) may contain a curing catalyst.

The curing catalyst is one to accelerate the curing reaction and to impart excellent chemical properties and physical properties to the coating film.

In the case of using a blocked isocyanate-type curing agent, a curing catalyst is preferably a tin catalyst (stannous octoate, tributyltin laurate, dibutyltin dilaurate, etc.).

Curing catalysts may be used alone, or in combination of two or more of them.

(Other components)

Composition (α) may, as the case requires, further contain additives other than a pigment, a curing agent and a curing catalyst (hereinafter referred to as other additives).

Other additives may, for example, be a ultraviolet absorber, a light stabilizer, a matting agent (ultrafine synthetic silica, etc.), a surfactant (a nonionic surfactant, a cationic surfactant, or an anionic surfactant), a leveling agent, a surface modifier (to improve the surface smoothness of the coating film), a degassing agent (having a function to discharge air included in the powder, a blocking agent discharged from a curing agent, moisture, etc. out of the molten film, so that they will not stay in the coating film, and it is normally solid, but when melted, it becomes to have very low viscosity), a filler, a heat stabilizer, a thickener, a dispersing agent, an antistatic agent, a rust inhibitor, a silane coupling agent, an antifouling agent, a low-staining agent, etc.

<Ultraviolet absorber>

As the ultraviolet absorber, either an organic ultraviolet absorber or an inorganic ultraviolet absorber may also be used.

Ultraviolet absorbers may be used alone, or may be used in combination of two or more of them.

The organic ultraviolet absorber may, for example, be a salicylate-type ultraviolet absorber, a benzotriazole-type ultraviolet absorber, a benzophenone-type ultraviolet absorber, a cyanoacrylate-type ultraviolet absorber or the like.

As the organic ultraviolet absorber, a compound having a molecular weight of from 200 to 1,000 is preferred. When the molecular weight is at least 200, it is less likely to volatilize during coating of the powder coating material, and it can be retained in the coating film. When the molecular weight is at most 1,000, it is readily meltable at the time of application of the powder coating material, and will be excellent in dispersibility in the coating film.

As the organic ultraviolet absorber, a compound having a melting point of from 50 to 150°C is preferred. When the melting point is at least 50°C, it is less likely to volatilize during coating of the powder coating material, and it can be retained in the coating film. When the melting point is at most 150°C, it is readily meltable at the time of application of the powder coating material, and will be excellent in dispersibility in the coating film.

As the organic ultraviolet absorber, a compound having a volatilization temperature of from 180 to 400°C is preferred, and particularly preferred is a compound having a volatilization temperature of from 220 to 350°C. At the time of application of the powder coating material, a temperature condition of from 150 to 220°C is required, and therefore, within such a range, it is less likely to volatilize and will be excellent in dispersibility in the coating film.

Commercial products of the organic ultraviolet absorber may, for example, be "Tinuvin (registered trademark) 326" (molecular weight: 315.8, melting point: 139°C), "Tinuvin (registered trademark) 405" (molecular weight: 583.8, melting point: 74 to 77°C), "Tinuvin (registered trademark) 460" (molecular weight: 629.8, melting point: 93 to 102°C), "Tinuvin (registered trademark) 900" (molecular weight: 447.6, melting point: 137 to 141°C) and "Tinuvin (registered trademark) 928" (molecular weight: 441.6, melting point: 109 to 113°C), manufactured by BASF, "Sanduvor (registered trademark) VSU powder" (molecular weight: 312.0, melting point: 123 to 127°C), manufactured by Clariant, "Hastavin (registered trademark) PR-25 Gran" (molecular weight: 250.0, melting point: 55 to 59°C), manufactured by Clariant, etc.

As the inorganic ultraviolet absorber, a filler-type inorganic ultraviolet absorber containing an ultraviolet absorbing oxide (such as zinc oxide or cerium oxide) may be mentioned.

As the inorganic ultraviolet absorber, composite particles of zinc oxide and titanium oxide, composite particles of cerium oxide and titanium oxide, composite particles of zinc oxide and cerium oxide, or composite particles of titanium oxide, zinc oxide and cerium oxide, are preferred.

<Light stabilizer>

A light stabilizer is one to protect the resin (PVDF (A), resin (B), etc.) in the coating film from ultraviolet rays.

As the light stabilizer, a hindered amine light stabilizer having a molecular weight of from 300 to 5,000 and a melting point of from 50 to 250°C is preferred from such a viewpoint that it will be uniformly diffused into the molten film at the time of applying the powder coating material. From such viewpoint that it will be uniformly diffused into the composition at the time of melt-kneading of the composition, a hindered amine light stabilizer having a molecular weight of from 400 to 4,000 and a melting point of from 60 to 200°C is more preferred.

Light stabilizers may be used alone, or may be used in combination of two or more of them.

Commercial products of a hindered amine light stabilizer may, for example, be "Tinuvin (registered trademark) 111FDL" (molecular weight: 2,000 to 4,000, melting point: 63°C), "Tinuvin (registered trademark) 144" (molecular weight: 685, melting point: 146 to 150°C) and "Tinuvin (registered trademark) 152" (molecular weight: 756.6, melting point: 83 to 90°C), manufactured by BASF, "Sanduvor (registered trademark) 3051 powder" (molecular weight: 364.0, melting point: 225°C), "Sanduvor (registered trademark) 3070 powder" (molecular weight: 1,500, melting point: 148°C) and "VP Sanduvor (registered trademark) PR-31" (molecular weight: 529, melting point: 120 to 125°C), manufactured by Clariant, etc.

(Contents of respective components in composition ($\alpha$))

The content of PVDF (A) in composition ($\alpha$) is from 30 to 90 parts by mass, preferably from 35 to 90 parts by mass, particularly preferably from 40 to 85 parts by mass, in the total of 100 parts by mass of PVDF (A) and the resin (B). When the content of PVDF (A) is at least the lower limit value, the coating film will be further excellent in weather resistance. When the content of PVDF (A) is at most the upper limit value, the coating film will be further excellent in bending processability.

Resin components contained in composition ($\alpha$) preferably consist solely of PVDF (A) and the resin (B), i.e. composition ($\alpha$) preferably does not contain other resins other than PVDF (A) and the resin (B). When composition ($\alpha$) does not contain other resins, the coating film will be further excellent in weather resistance and bending processability.

In a case where composition ($\alpha$) contains a pigment, the content of the pigment in composition ($\alpha$) is preferably from 20 to 200 parts by mass, particularly preferably from 50 to 150 parts by mass, to 100 parts by mass of the resin components contained in composition ($\alpha$).

In a case where composition ($\alpha$) contains a curing agent, the content of the curing agent in composition ($\alpha$) is preferably from 1 to 50 parts by mass, particularly preferably from 3 to 30 parts by mass, to 100 parts by mass of the resin components contained in composition ($\alpha$).

In a case where the curing agent is a blocked isocyanate-type curing agent, the content of the blocked isocyanate-type curing agent in composition ($\alpha$) is preferably such an amount that the molar ratio of isocyanate groups to the hydroxy groups in composition ($\alpha$) will be from 0.05 to 1.5, particularly preferably from 0.8 to 1.2. When the molar ratio is at least the lower limit value in the above range, the curing degree of the powder coating material becomes high, and adhesion of the coating film to the substrate, hardness and chemical resistance of the coating film, etc. will be excellent. When the molar ratio is at most the upper limit value in the above range, the coating film is less likely to become brittle, and yet, the coating film will be excellent in heat resistance, chemical resistance, moisture resistance, etc.

In a case where composition ($\alpha$) contains a curing catalyst, the content of the curing catalyst in composition ($\alpha$) is preferably from 0.0001 to 10 parts by mass to 100 parts by mass in total of solid contents in composition ($\alpha$) other than a pigment. When the content of the curing catalyst is at least the above lower limit value, catalytic effects tend to be sufficiently obtained. When the content of the curing catalyst is at most the upper limit value, a gas such as air that has been included in the powder coating material at the time of applying the powder coating material, can readily be released, whereby deterioration in heat resistance, weather resistance and water resistance of the coating film caused by the remaining gas will be less.

In a case where composition ($\alpha$) contains other additives, the total content of other additives in composition ($\alpha$) is preferably at most 45 mass%, particularly preferably at most 30 mass%, in composition ($\alpha$) (100 mass%).

(Mechanism of effects)

The above-described composition for powder coating material of the present invention (composition ($\alpha$)) contains PVDF (A) having a heterologous sequence ratio of at most 37%, whereby it is possible to obtain a powder coating material capable of forming a coating film excellent in weather resistance.

Further, the above-described composition for powder coating material of the present invention (composition ($\alpha$)) contains the resin (B), and the heterologous sequence ratio of PVDF (A) is at least 11%, whereby it is possible to obtain a powder coating material capable of forming a coating film excellent in bending processability.

[Powder coating material]

The powder coating material of the present invention may be classified into the following powder coating material (I) and powder coating material (II).

Powder coating material (I): comprises a first powder (powder (X)) composed of the composition for powder coating material of the present invention (composition ($\alpha$)).

Powder coating material (II): comprises a first powder (powder (X)) composed of the composition for powder coating material of the present invention (composition ($\alpha$)) and a second powder (powder (Y)) composed of a composition for powder coating material containing at least one resin (C) selected from the group consisting of an acrylic resin, a polyester resin, an urethane resin, an epoxy resin and a silicone resin and containing no fluororesin.

Here, the "composition for powder coating material containing the resin (C) and containing no fluororesin" will be hereinafter referred to as "composition ($\beta$)".

Now, each of powder coating material (I) and powder coating material (II) will be described.

[Powder coating material (I)]

Powder coating material (I) comprises at least one type of powder (X).

The content of powder (X) in the powder coating material (I) is preferably from 50 to 100 mass%, more preferably from 70 to 100 mass%, further preferably from 80 to 100 mass%, particularly preferably from 90 to 100 mass%. Powder coating material (I) may be a coating material composed solely of powder (X).

(Method for producing powder coating material (I))

Powder coating material (I) may be produced, for example, by a production method comprising the following step (a), step (b) and step (c).

(a) A step of melt-kneading a mixture comprising PVDF (A) and the resin (B), which may, as a case requires, contain the above-mentioned additives, to obtain a kneaded material composed of composition ($\alpha$).
(b) A step of pulverizing the kneaded material composed of composition ($\alpha$) to obtain powder (X).
(c) As the case requires, a step of conducting classification of powder (X).

<Step (a)>

The respective components are mixed to obtain a mixture, and then, the mixture is melt-kneaded to obtain a kneaded product wherein the components are homogenized.

Each component is preferably preliminarily pulverized in a powder form.

The apparatus to be used for mixing may, for example, be a high speed mixer, a V type mixer or a reversing mixer.

The apparatus to be used for melt-kneading may, for example, be a single screw extruder, a twin-screw extruder or a planetary gear.

A kneaded product is preferably pelletized after being cooled.

<Step (b)>

The apparatus to be used for pulverization may, for example, be a pulverizer such as a pin mill, a hammer mill or a jet mill.

<Step (c)>

In order to remove a powder with a particle size being too small or too large, it is preferred to conduct classification after pulverization. When classification is to be conducted, it is preferred to remove at least either particles with a particle size of less than 10 $\mu$m or particles with a particle size exceeding 100 $\mu$m.

The classification method may, for example, be a method by sieving or an air classification method.

The average particle size of powder (X) may, for example, be preferably from 15 to 50 $\mu$m, in a 50% average volume particle size distribution. Measurement of the particle size of the powder is usually carried out by using a particle size measuring instrument of a type to capture the potential change at the time of passing through a pore, of a laser diffraction system, of an image determination type or of a sedimentation rate measuring system.

(Mechanism of effects)

The above-described powder coating material (I) contains a powder composed of the composition for powder coating material of the present invention (composition ($\alpha$)), whereby it is possible to form a coating film excellent in weather resistance and bending processability.

[Powder coating material (II)]

Powder coating material (II) comprises at least one type of powder (X) and at least one type of the following powder (Y).
Powder (Y): A powder composed of composition ($\beta$). Composition ($\beta$) may contain additives as the case requires.
The total content of powder (X) and powder (Y) in powder coating material (II) is preferably from 50 to 100 mass%, more preferably from 70 to 100 mass%, further preferably from 80 to 100 mass%, particularly preferably from 90 to 100 mass%. Powder coating material (II) may be a coating material composed solely of powder (X) and powder (Y).
The mixing ratio of powder (X) to powder (Y) (powder (X)/powder (Y)) in powder coating material (II) is preferably from 10/90 to 90/10 (mass ratio), more preferably from 20/80 to 80/20 (mass ratio), particularly preferably from 25/75 to 75/25 (mass ratio). When the proportion of powder (X) is at least the above lower limit value, the weather resistance of the coating film will be further excellent. When the proportion of powder (Y) is at least the above lower limit value, it is possible to reduce the cost for the coating film.

(Resin (C))

Resin (C) is at least one member selected from the group consisting of an acrylic resin, a polyester resin, an urethane resin, an epoxy resin and a silicone resin.

<Acrylic resin, polyester resin, epoxy resin>

As the acrylic resin, polyester resin and epoxy resin, ones similar to those exemplified for composition ($\alpha$) may be mentioned, and the same applies to preferred embodiments.

<Urethane resin>

As the urethane resin, a mixture obtained by mixing, or a resin obtained by reacting, a polyol (such as acrylic polyol, polyester polyol, polyether polyol or polyhydric alcohol) with an isocyanate compound, may be mentioned. It is preferred to employ a powder coating material comprising a powdered polyol (such as acrylic polyol, polyester polyol or polyether polyol) and a powdered isocyanate compound or blocked isocyanate compound.

<Silicone resin>

The silicone resin may be one which has a branched structure, has a silanol group (Si-OH) as a reactive group, is curable by dehydration condensation with each other, and is capable of forming, after curing, a coating film of a three-dimensional crosslinked structure. Otherwise, a silicone resin with a relatively low molecular weight (modified silicone resin intermediate) and another thermosetting resin (such as an alkyd resin, a polyester resin, an epoxy resin or an acrylic resin) may be used in combination.
Commercial products of the silicone resin may, for example, be "GLASCA HPC-7506", manufactured by JSR Corporation, "Gemlac (registered trademark)", manufactured by Kaneka Corporation, "SILIKOPON (registered trademark) EF", "SILIKOPON (registered trademark) EW", "SILIKOPON (registered trademark) EC" and "SILIKOPON (registered trademark) ED" manufactured by Evonik.

(Additives)

As the additives, ones similar to those exemplified for composition ($\alpha$) may be mentioned, and the same applies to preferred embodiments.

(Contents of respective components in composition ($\beta$))

The content of the resin (C) in composition ($\beta$) is preferably from 20 to 85 mass%, more preferably from 30 to 80 mass%, particularly preferably from 40 to 75 mass%, in composition ($\beta$) (100 mass%).

In a case where composition (β) contains a curing agent, the content of the curing agent in composition (β) is preferably from 1 to 50 parts by mass, particularly preferably from 3 to 30 parts by mass, to 100 parts by mass of the resin components contained in composition (β),.

In a case where the curing agent is a blocked isocyanate-type curing agent, the content of the blocked isocyanate-type curing agent in composition (β) is preferably such an amount that the molar ratio of isocyanate groups to hydroxy groups in composition (β) will be from 0.05 to 1.5, particularly preferably from 0.8 to 1.2. When the molar ratio is at least the lower limit value in the above range, the curing degree of the powder coating material becomes high, and adhesion of the coating film to the substrate, hardness and chemical resistance of the coating film, etc. will be excellent. When the molar ratio is at most the upper limit value in the above range, the coating film is less likely to be brittle, and yet, heat resistance, chemical resistance, moisture resistance, etc. of the coating film, will be excellent.

In a case where composition (β) contains a curing catalyst, the content of the curing catalyst in composition (β) is preferably from 0.0001 to 10 parts by mass to 100 parts by mass in total of solid contents in composition (β) other than a pigment. When the content of the curing catalyst is at least the above lower limit value, catalytic effects tend to be sufficiently obtained. When the content of the curing catalyst is at most the upper limit value, a gas such as air that has been included in the powder coating material at the time of applying the powder coating material, can be readily released, whereby deterioration in heat resistance, weather resistance and water resistance of the coating film to be caused by the remaining gas, is less likely.

When composition (β) contains other additives, the total content of other additives in composition (β) is preferably at most 45 mass%, particularly preferably at most 30 mass%, in composition (β) (100 mass%).

(Contents of respective components in entire powder coating material (II))

The total content of the resin (B) in composition (α) and the resin (C) in composition (β), is preferably from 10 to 90 parts by mass, more preferably from 20 to 80 parts by mass, particularly preferably from 25 to 75 parts by mass, to 100 parts by mass in total of PVDF (A) and the resin (B) in composition (α) and the resin (C) in composition (β). When the total content of the resin (B) and the resin (C) is at least the above lower limit value, it is possible to reduce the cost for the coating film. When the total content of the resin (B) and the resin (C) is at most the upper limit value, the weather resistance of the coating film will be further excellent.

The total content of a pigment in composition (α) and a pigment in composition (β) is preferably from 20 to 200 parts by mass, particularly preferably from 50 to 150 parts by mass, to 100 parts by mass of the resin components contained in composition (α) and composition (β).

(Method for producing powder coating material (II))

Powder coating material (II) may, for example, be produced by a production method having the following steps (a) to (g).

(a) A step of melt-kneading a mixture comprising PVDF (A) and the resin (B), which may, as the case requires, contain additives, to obtain a kneaded product composed of composition (α).
(b) A step of pulverizing the kneaded product composed of composition (α) to obtain powder (X).
(c) As the case requires, a step of conducting classification of powder (X).
(d) A step of melt-kneading a mixture comprising the resin (C) and not containing a fluororesin, which may, as the case requires, contain additives, to obtain a kneaded product composed of composition (β).
(e) A step of pulverizing the kneaded product composed of composition (β) to obtain powder (Y).
(f) As the case requires, a step of conducting classification of powder (Y).
(g) A step of dry-blending powder (X) and powder (Y).

<Step (a), (d)>

The respective components are mixed to prepare a mixture, and then, the mixture is melt-kneaded to obtain a kneaded product wherein the respective components are homogenized.

Each component is preferably preliminarily pulverized in a powder form.

The apparatus to be used for mixing may, for example, be a high speed mixer, a V type mixer or a reversing mixer.

The apparatus to be used for melt-kneading may, for example, be a single screw extruder, a twin-screw extruder or a planetary gear.

The kneaded product is preferably pelletized after cooling.

<Step (b), (e)>

The apparatus to be used for pulverization may, for example, be a pulverizer such as a pin mill, a hammer mill or a jet mill.

<Step (c), (f)>

In order to remove a powder with a particle size being too small or too large, it is preferred to conduct classification after pulverization. In the case of conducting such classification, it is preferred to remove at least either particles with a particle size of less than 10 $\mu$m or particles with a particle size exceeding 100 $\mu$m.

The classification method may, for example, be a method by sieving or an air classification method.

The average particle size of powder (X) and powder (Y) is, for example, preferably from 15 to 50 $\mu$m in a 50% average volume particle size distribution. Measurement of the particle size of the powder is usually carried out by using a particle size measuring instrument e.g. of a type to capture the potential change at the time of passing through a pore, of a laser diffraction system, of an image determination type, or of a sedimentation rate measuring system.

<Step (g)>

The apparatus to be used for dry blending may, for example, be a high-speed mixer, a double cone mixer, a kneader, a tumbler mixer, a mixing shaker, a drum shaker or a rocking shaker.

The mixing ratio of powder (X) to powder (Y) (powder (X)/powder (Y)) is preferably from 10/90 to 90/10 (mass ratio), more preferably from 20/80 to 80/20 (mass ratio), particularly preferably from 25/75 to 75/25 (mass ratio). When the proportion of powder (X) is at least the above lower limit value, the weather resistance of the coating film will be further excellent. When the proportion of powder (Y) is at least the above lower limit value, it is possible to reduce the cost for the coating film.

(Mechanism of effects)

The above-described powder coating material (II) contains powder (X) and powder (Y), whereby it is possible to form a coating film excellent in weather resistance and bending processability.

[Coated article]

The coated article of the present invention has, on the surface of a substrate, a coating film formed of powder coating material (I) or powder coating material (II) (hereinafter powder coating material (I) and powder coating material (II) may collectively be referred to as the powder coating material).

To increase adhesion between the substrate and the coating film, a primer layer comprising a primer may be provided between the substrate and the coating film.

As the primer, at least one resin selected from the group consisting of an acrylic resin, a polyester resin and an epoxy resin may suitably be used.

The thickness of the primer layer is preferably from 1 to 60 $\mu$m, more preferably from 5 to 40 $\mu$m.

(Substrate)

The material for the substrate is preferably a metal such as aluminum, iron or magnesium, and aluminum or an aluminum alloy is particularly preferred, since it is excellent in corrosion resistance and light in weight and has excellent properties for use as building material. The aluminum alloy may, for example, be an alloy of aluminum with at least one member selected from the group consisting of copper, manganese, silicon, magnesium, zinc and nickel.

The shape, size, etc. of the substrate are not particularly limited.

The aluminum or aluminum alloy may have a coating film on its surface or may be surface-treated with a chemical conversion treatment agent, and it is particularly preferably surface-treated with a chemical conversion treatment agent, whereby adhesion between the substrate and the coating film formed from the powder coating material will be excellent.

The chemical conversion treatment agent may, for example, be a hexavalent chromium-type treatment agent, a trivalent chromium-type treatment agent, a zirconium-type treatment agent or a titanium-type treatment agent. From the point of concern for the environment, a zirconium-type treatment agent or a titanium-type treatment agent is preferred.

Specifically, as the zirconium-type treatment agent, "Chemibonder (trade name) 5507, 5703, 5705, 5706", manufactured by The Japan Cee-Bee Chemical Co., Ltd., "Parukoto 3762, 3796, 20X", manufactured by Nihon Parkerizing Co., Ltd. "Alodine (trade name) 5200, 4707", manufactured by Henkel, "Arusafu (trade name) 320, 375", manufactured by NIPPONPAINT Co., Ltd., "E-CLPS (trade name) 1700, 1900", manufactured by Bulk Chemical Co., Ltd., etc., may be mentioned, and as the titanium-type treatment agent, "Arusafu (trade name) CX4707", manufactured by NIPPONPAINT Co., Ltd., "E-CLPS (trade name) 2100, 2900", manufactured by Bulk Chemical Co., Ltd., etc. may be mentioned.

(Method for producing coated article)

The coated article of the present invention can be produced by a production method having the following step (h) and step (i).

(h) A step of applying the powder coating material on a substrate to form a molten film made from a melt of the powder coating material.
(i) A step of cooling the molten film to form a coating film.

<Step (h)>

The powder coating material is applied on a substrate to form a molten film made from a melt of the powder coating material on the substrate.
The molten film made from a melt of the powder coating material may be formed at the same time as the application of the powder coating material on the substrate, or may be formed by depositing a powder of the powder coating material on a substrate and then heating and melting the powder on the substrate. In a case where the powder coating material is thermosetting, almost at the same time as the powder coating material is heated and melted, the curing reaction of reactive components in the composition will start, and therefore, it is necessary to conduct the heating and melting of the powder coating material, and the deposition on the substrate, almost at the same time, or to conduct the heating and melting of the powder coating material after depositing the powder coating material on the substrate.
In a case where a primer layer is to be provided, the primer layer and the molten film made from a melt of the powder coating material, may be formed by depositing, on a substrate, at least one primer selected from the group consisting of an acrylic resin, a polyester resin and an epoxy resin, and then, depositing a powder of the powder coating material, followed by heating and melting. Otherwise, they may be formed by depositing the primer on the substrate, followed by heating and melting, and then, depositing a powder of the powder coating material, followed by heating and melting again.
The heating temperature (hereinafter referred to also as the baking temperature) and the heating retention time (hereinafter referred to as the baking time) to heat and melt the powder coating material and to maintain the molten state for a predetermined time, are suitably set depending upon the types and composition of raw material components of the powder coating material, the desired thickness of the coating film, etc. In a case where the powder coating material is thermoplastic, the baking temperature is preferably from 200 to 300°C. The baking time is preferably from 5 to 180 minutes. In a case where the powder coating material is thermosetting, the baking temperature is preferably set depending on the reaction temperature of the curing agent. For example, in the case of using a blocked polyisocyanate-type curing agent as the curing agent, the baking temperature is preferably from 170 to 210°C. The baking time is preferably from 5 to 120 minutes, particularly preferably from 10 to 60 minutes.
The coating method may, for example, be an electrostatic coating method, an electrostatic spraying method, an electrostatic immersion method, a misting method, a fluidized bed coating method, a blowing method, a spraying method, a thermal spraying method, a plasma spraying method, etc. An electrostatic coating method using a powder coating gun is preferred, in that even when the molten film is thinned, surface smoothness of the molten film will be excellent and from such a viewpoint that the coating film will be excellent in hiding properties.
The powder coating gun may, for example, be a corona charging type spray gun or a friction charging type spray gun. The corona charging type spray gun is one to spray the powder coating material by corona discharge treatment. The friction charging type spray gun is one to spray the powder coating material by triboelectric charging treatment.
The amount of the powder coating material ejected from the powder coating gun is preferably from 50 to 200 g/min.
The distance from the tip of the gun portion of the powder coating gun to the substrate, is preferably from 150 to 400 mm from the viewpoint of coating efficiency.
In the case of using a corona charging type coating gun, the load voltage applied to components constituting the powder coating material by corona discharge treatment is preferably from -50 to -100 kV, and from the viewpoint of the deposition efficiency (percentage of the powder coating material depositing on the substrate) and excellent appearance of the coating film, it is preferably from -60 to -80 kV.
In the case of using a friction charging type spray gun, the internally generated current value of the powder coating material caused by triboelectric charging treatment is preferably from 1 to 8 μA, from the viewpoint of the deposition efficiency and excellent appearance of the coating film.

In the case of industrial implementation of the electrostatic coating method, for example, in order to set up a uncoated substrate thereon and to earth it, a grounded conductive horizontal belt conveyor is installed in a coating chamber, and the gun is set at an upper portion of the coating chamber. The coating pattern width is preferably from 50 to 500 mm, the traveling speed of the gun is preferably from 1 to 30 m/min, the conveyor speed is preferably from 1 to 50 m/min, and depending upon the particular purpose, suitable conditions may be selected from the above ranges.

As the coating method, a fluidized-bed coating method is preferred from such a viewpoint that a relatively thick coating can thereby be formed.

In the fluidized bed coating method, it is preferred that a substrate with its surface to be coated, heated to a temperature of at least the melting temperature of the powder coating material, is immersed in a fluidized bed in which the powder coating material is flowing as carried by a gas such as air, to let the powder coating material be deposited on the surface of the substrate to be coated and, at the same time, melted to form a molten film having a predetermined thickness on the substrate, and then, the coated substrate is taken out from the fluidized bed, whereupon, in some cases, the molten film is maintained in the molten state for a predetermined time, and then the molten state coating film is cooled and, in some cases, cured, to obtain the substrate having a coating film formed thereon.

The temperature in the fluidized bed in the fluidized bed coating method is preferably from 15 to 55°C, and the temperature of the gas such as air blown into the fluidized bed in order to fluidize the powder is also preferably from 15 to 55°C. The temperature of at least the surface to be coated, of the substrate at the time of being immersed in the fluidized bed, is preferably from 300 to 450°C, and the time allowed for the substrate to be immersed in the fluidized bed is preferably from 1 to 120 seconds. The substrate taken out from the fluidized bed is preferably maintained at a temperature of from 150 to 250°C for from 1 to 5 minutes.

<Step (f)>

The molten film in the molten state is cooled to room temperature (20 to 25°C), and in some cases, cured to form a coating film.

Cooling after baking may be either quenching or annealing, but annealing is preferred in that the coating film will be thereby less likely to peel from the substrate.

The thickness of the coating film is not particularly limited and is preferably from 100 to 1,000 μm. In an application to a member for a high-rise building, such as an aluminum curtain wall, 20 to 90 μm is preferred. In an application where weather resistance is highly required, such as an outdoor unit of air conditioner installed along the coast, a traffic signal pole, a sign board, etc., 100 to 200 μm is preferred. Here, as mentioned above, in a case where the thickness is thick, such can be achieved by selecting the fluidized bed coating method.

EXAMPLES

Now, the present invention will be described in detail with reference to Examples and Comparative Examples. However, the present invention is not limited thereto.

Ex. 1 to 3 are Examples of the present invention, Ex. 4 to 6 are Comparative Examples, and Ex. 7 and 8 are Reference Examples.

[Measuring methods, evaluation methods]

The measuring methods and the evaluation methods will be shown below.

(Heterologous sequence ratio)

$^{19}$F-NMR of PVDF was measured under the following conditions.

Measuring device: ECP-400, manufactured by Japan Electronics Co., Ltd.,
Measuring method: Single pulse method (pulse width 45 degrees, wait 4 seconds),
Measuring solvent: deuterated DMF,
Internal standard: $CFCl_3$,
Measuring temperature: 60°C,
Sample tube outer diameter: 5 mm.

The heterologous sequence ratio was calculated by the following formula (1) from the integral value ($I_1$) of

signals derived from regular sequence appearing in the vicinity of from -85 to -98 ppm in the obtained spectrum and the integral value ($I_2$) of signals derived from heterologous sequence appearing in the vicinity of from -113 to -120 ppm in the obtained spectrum.

$$\text{Heterologous sequence ratio (\%)} = \{I_2/(I_1 + I_2)\} \times 100 \quad (1)$$

(Melting point)

Using Thermal Analysis System (manufactured by Perkin Elmer), with respect to 10 mg of a sample, the heat balance was measured within a temperature range of from -25 to 200°C at a temperature raising rate of 10°C/min, whereby the melting peak in the obtained chart was taken as the melting point.

(Molecular weights)

With respect to a 0.5 mass% tetrahydrofuran (hereinafter referred to as THF) solution of a sample, the number average molecular weight and the mass average molecular weight as calculated as styrene were obtained by using TSKgel G4000XL (manufactured by Tosoh Corporation) as a column, at a flow rate of carrier (THF) being 1.0 mL/min.

(Crystallinity)

Using EXSTAR DSC7020 (manufactured by SII Nano Technology, Inc.), 10 mg of a sample was heated from room temperature to 200°C at a temperature-raising rate of 10°C/min, and heat of fusion $M_1$ (J/g) was calculated from the area of endothermic peak in the obtained chart and the amount of the sample, whereupon the crystallinity of PVDF (A) was calculated by the following formula (2) from $M_1$ and heat of fusion $M_2$ of perfect crystal of PVDF (literature value: 104.5 J/g as disclosed in EXPRESS Polymer Letters, Vol. 4, No. 5, 2010, p. 284-291).

$$\text{Crystallinity (\%)} = (M_1/M_2) \times 100 \quad (2)$$

For the crystallinity during quenching, a sample was completely melted at 300°C and then cooled from 300°C to room temperature at a cooling rate of 10°C/min for re-crystallization, and using EXSTAR DSC7020 (manufactured by SII Nano Technology, Inc.), 10 mg of the re-crystallized sample was heated from room temperature to 200°C at a temperature-raising rate of 10°C/min, and heat of fusion $M_1$ (J/g) was calculated from the area of endothermic peak in the obtained chart and the amount of the sample, whereupon the crystallinity during quenching was calculated by the formula (2) from $M_1$ and heat of fusion $M_2$ of perfect crystal of PVDF (literature value: 104.5 J/g as disclosed in EXPRESS Polymer Letters, Vol. 4, No. 5, 2010, p. 284-291).

The crystallinity during annealing was calculated in the same manner as the crystallinity during quenching, except that the cooling rate as a re-crystallization condition was changed to 0.5°C/min.

(Melt viscosity)

The melt viscosity at 190°C of a resin was measured by using a rotary rheometer (rheometer MCR302, manufactured by Anton Paar Japan K.K.) under a temperature-raising condition of 10°C/min.

(Glass transition temperature)

Using Thermal Analysis System (manufactured by Perkin Elmer), with respect to 10 mg of a sample, the heat balance was measured within a temperature range of from -25 to 200°C at a temperature-raising rate of 10°C/min, and from the inflection point of the obtained chart, the glass transition temperature was obtained by a midpoint method.

(Average particle size)

The average particle size of a powder was measured by a laser diffraction particle size distribution analyzer (Helos-Rodos, manufactured by Sympatec Inc.) and determined by the 50% average volume particle size distribution.

(Appearance)

The state of the surface of the coating film was visually observed and judged by the following standards.

○ (Good): The coating film was excellent in surface smoothness, and surface roughness, repelling, wettability defect or the like was not observed.
× (Bad): The coating film was poor in surface smoothness, and surface roughness, repelling, wettability defect or the like was observed.

(Glossiness)

Using a gloss meter (PG-1M, manufactured by Nippon Denshoku Industries Co. Ltd.), the 60-degree specular glossiness of the surface of a coating film was measured in accordance with JIS K 5600-4-7, 1999 (ISO 2813, 1994).

(Bending processability)

In accordance with JIS K 5600-5-1, 1999 (ISO 1519, 1973), a bending test of a test piece was conducted, and the bending processability was evaluated under the following standards.

○ (Good): Rupture of the coating film or peeling of the coating film from the substrate was not observed.
× (Bad): Rupture of the coating film or peeling of the coating film from the substrate was observed.

(Weather resistance 1)

Using a xenon weather meter (manufactured by Suga Test Instruments Co., Ltd.), the 60-degree specular glossiness of the surface of a cured film immediately before the test and the 60-degree specular glossiness of the surface of the cured film after 100 hours from the test, were measured in accordance with JIS K 5600-4-7, 1999 (ISO 2813, 1994) by using a gloss meter (PG-1M, manufactured by Nippon Denshoku Industries Co. Ltd.). When the value of the 60-degree specular gloss immediately before the test was taken as 100%, the proportion of the value of the 60-degree specular glossiness after 100 hours from the test, was calculated as the glossiness retention (unit:%), and the accelerated weather resistance was judged by the following standards. Here, in an accelerated weathering test, usually water is sprayed, but in this test, instead of spraying water, a 1% hydrogen peroxide aqueous solution was employed.

<Test Conditions>

Relative humidity: 70% RH,
Temperature: 50°C,
Light source: 80 W/m$^2$ (300 to 400 nm).

<Judging standards>

○ (Good): The gloss retention was at least 50%, and discoloration or the like of the cured film was not observed.
× (Bad): The gloss retention was less than 50%, and discoloration or the like of the cured film was observed.

(Weather resistance 2)

A test piece was installed outdoor in Naha-city, Okinawa Prefecture, and the 60-degree specular glossiness of the surface of a coating film immediately before the installation and the 60-degree specular glossiness of the surface of the coating film after three years, were measured in accordance with JIS K 5600-4-7, 1999 (ISO 2813, 1994) by using a gloss meter (PG-1M, manufactured by Nippon Denshoku Industries Co. Ltd.). When the value of the 60-degree specular glossiness immediately before the test was taken as 100%, the proportion of the value of the 60-degree specular glossiness after three years was calculated as the gloss retention (unit: %), and the accelerated weather resistance was judged by the following standards.

<Judging standards>

○ (Good): The gloss retention was at least 60%, and no discoloration was observed.
Δ (Acceptable): The gloss retention was at least 40% and less than 60%, and no discoloration was observed.
× (Bad): The gloss retention was less than 40%, or discoloration to yellow was observed.

[Production Example 1]

(Production of PVDF (A-1))

A polymerization vessel of 3 L equipped with a stirrer, was degassed, and 600 g of deionized water having 3 g of $CF_3CF_2OCF_2CF_2OCF_2COONH_4$ dissolved therein, 1.2 g of acetone, 0.3 g of ammonium persulfate, and 40 g of VDF, were charged and stirred for 36 hours at 300 rpm. Inside of the polymerization vessel was heated to 65°C to initiate polymerization. The polymerization pressure was 2.0 MPa. VDF was charged continuously so that the pressure became constant during the polymerization, and at the time when the continuous charging of VDF became 180 g, inside of the polymerization vessel was cooled to room temperature, and unreacted monomers were purged. The polymerization vessel was opened, and the obtained aqueous emulsion was frozen and coagulated to precipitate a polymer, followed by washing three times with 1,000 mL of deionized water (25°C). The washed polymer was dried at 150°C for 12 hours to obtain 170 g of PVDF (A-1). The heterologous sequence ratio, melting point, number average molecular weight, mass average molecular weight, molecular weight distribution, crystallinity and melt viscosity of PVDF (A-1) are shown in Table 1.

[Production Example 2]

(Production of PVDF (Z-1))

A polymerization vessel of 3 L equipped with a stirrer was degassed, 0.75 g of ammonium perfluorooctanoate, 0.01 g of an emulsifier of polyoxyethylene alkyl ester type (MYS40, manufactured by Nikko Chemicals Co., Ltd.), 1.2 g of acetone, 0.3 g of ammonium persulfate and 40 g of VDF, were charged and stirred for 36 hours at 300 rpm. Thereafter, in the same manner as in Production Example 1 except that the temperature in the polymerization vessel was changed to 100°C, 170 g of PVDF (Z-1) was obtained. The heterologous sequence ratio, melting point, number-average molecular weight, mass average molecular weight, molecular weight distribution, crystallinity and melt viscosity of PVDF (Z-1) are shown in Table 1.
Here, PVDF (Z-2) in Table 1 is the after-mentioned commercially available PVDF.

[Table 1]

| Production Example | 1 | 2 | - |
|---|---|---|---|
| Heterologous sequence ratio (%) | 20 | 40 | 37 |
| Melting point (°C) | 155 | 165 | 172 |
| Number average molecular weight | 164,000 | 225,000 | 216,000 |
| Mass average molecular weight | 250,000 | 235,000 | 583,000 |
| Molecular weight distribution | 1.7 | 2.9 | 2.7 |
| Crystallinity (%) | 23.5 | - | 37.9 |
| Crystallinity (%) (during quenching) | 19.6 | - | 32.9 |
| Crystallinity (%) (during annealing) | 20.9 | - | 36.5 |
| Difference in crystallinity (\|During annealing - during quenching\|) | 1.3 | - | 3.6 |
| Melt viscosity at 90°C (Pa·s) | 2,350 | - | 5,200 |
| Type of PVDF to be produced | (A-1) | (Z-1) | (Z-2) |

[Production Example 3]

(Production of resin (B-1))

Into a four-necked flask of 1 L equipped with a condenser and a thermometer, 200 mL of deionized water, 2 g of a reactive emulsifier (ELEMINOL (trademark) JS-2, manufactured by Sanyo Chemical Industries, Ltd., succinate derivative), and 2 g of polyoxyethylene nonylphenyl ether (ethylene oxide 10 mole added), were charged. When the temperature reached 80°C in a warm bath under a nitrogen stream, 10 mL of a 2 mass% aqueous solution of ammonium persulfate was added. A mixture of 140.2 g of MMA, 80.0 g of EMA and 0.2 g of n-lauryl mercaptan as a chain transfer agent, was dropwise added over a period of 1 hour. Immediately thereafter, 2 mL of a 2 mass% aqueous solution of ammonium persulfate was added to initiate the reaction. After 3 hours, the temperature in the flask was raised to 85°C and held for 1 hour, followed by filtration through a 300-mesh wire gauze to obtain a blue-white aqueous dispersion. The aqueous dispersion was frozen and coagulated at -25°C, followed by dehydration washing, and vacuum drying at 80°C, to obtain 209.2 g of resin (B-1) being a white powdery MMA copolymer (MMA units/EMA units = 2/1 (molar ratio)). Resin (B-1) had a glass transition temperature of 55°C, a number average molecular weight of 53,000, a mass average molecular weight of 92,000 and a molecular weight distribution of 1.75. Further, the melt viscosity at 190°C was 0.314 Pa·s.

[Respective components used for preparing powder coating composition]

(Z-2): PVDF for lining (Kynar 761A, manufactured by Arkema Inc.). The heterologous sequence ratio, melting point, number average molecular weight, mass average molecular weight and molecular weight distribution are shown in Table 1.

(B-2): A polyester resin (CRYLCOAT (registered trademark) 4890-0, manufactured by DAICEL-ALLNEX LTD., number average molecular weight: 2,500, mass average molecular weight: 4,400, hydroxy value: 30 mgKOH/g, melt viscosity at 190°C: 5.25 Pa·s).

(B-3): An epoxy resin (EHPE3150, manufactured by Daicel Corporation, 1,2-epoxy-4-(2-oxiranyl)cyclohexane adduct of 2,2-bis(hydroxymethyl)-1-butanol, melting viscosity at 190°C: 0.254 Pa·s).

(D-1): Titanium oxide pigment (Ti-Pure (registered trademark) R960, manufactured by DuPont, titanium oxide content: 89 mass%).

(D-2): An organic ultraviolet absorber (Tinuvin (registered trademark) 405, manufactured by BASF, molecular weight: 583.8, melting point: 76.3°C, volatilization temperature: 348.5°C).

(D-3): A degassing agent (benzoin).

(D-4): A leveling agent for powder coating material (BYK (registered trademark) - 360P, manufactured by BYK-Chemie Inc.).

[Ex. 1 to 6]

The components shown in Table 2 were mixed for about 10 to 30 minutes by using a high speed mixer (manufactured by Yusaki Co., Ltd.), to obtain a powdered mixture. Using a twin screw extruder (16 mm extruder, manufactured by Thermo Prism Ltd.), the mixture was subjected to melt-kneading at a barrel set temperature of 120°C, to obtain pellets made of a composition for powder coating material. The pellets were pulverized at room temperature using a pulverizer (rotor speed mill P14, manufactured by FRITSCH), followed by classification by 200 mesh, to obtain a powder having an average particle size of about 20 μm.

Using the obtained powder as a powder coating material, on one surface of an aluminum plate having a thickness of 1 mm and subjected to chromate treatment, electrostatic coating was applied by an electrostatic coating machine (GX3600C, manufactured by Onoda Cement Corporation), followed by holding for 10 minutes in an 250°C atmosphere. The coated product was left to cool to room temperature to obtain an aluminum plate having a coating film attached (hereinafter referred to also as an aluminum plate with a coating film). Using the obtained aluminum plate with a coating film as a test piece, evaluations were conducted. The results are shown in Table 2.

[Table 2]

| Ex. | | | 1 | 2 | 3 | 4 | 5 | 6 |
|---|---|---|---|---|---|---|---|---|
| Amount used (g) | PVDF | (A-1) | 70 | 70 | 70 | 15 | - | - |
| | | (Z-1) | - | - | - | - | 70 | - |
| | | (Z-2) | - | - | - | - | - | 70 |
| | Resin | (B-1) | 30 | - | - | 85 | 30 | 30 |
| | | (B-2) | - | 30 | - | - | - | - |
| | | (B-3) | - | - | 30 | - | - | - |
| | Add itives | (D-1) | 40 | 40 | 40 | 40 | 40 | 40 |
| | | (D-2) | 0.1 | 0.1 | 0.1 | 0.1 | 0.1 | 0.1 |
| | | (D-3) | 0.4 | 0.4 | 0.4 | 0.4 | 0.4 | 0.4 |
| | | (D-4) | 0.1 | 0.1 | 0.1 | 0.1 | 0.1 | 0.1 |
| Evaluations of coating film | Thickness of coating film ($\mu$m) | | 61 | 63 | 59 | 55 | 60 | 65 |
| | Appearance | | ○ | ○ | ○ | ○ | ○ | × |
| | Glossiness (%) | | 33 | 37 | 31 | 40 | 35 | 39 |
| | Bending processability | | ○ | ○ | ○ | ○ | ○ | × |
| | Weather resistance 1 | | ○ | ○ | ○ | × | × | ○ |
| | Weather resistance 2 | | ○ | ○ | ○ | × | × | ○ |

In Ex. 1 to 3 using a powder coating material made from a composition for powder coating material containing PVDF (A-1) having a heterologous sequence ratio in a range of from 11 to 37% and a melting point within a range of from 152 to 170°C, wherein the content of the PVDF (A-1) was from 30 to 90 parts by mass, to the total of 100 parts by mass of PVDF (A-1) and resin (B), the obtained coating film was excellent in weather resistance under normal conditions, and bending processability.

On the other hand, in Ex. 4 using a powder coating material made from a composition for powder coating material wherein the content of PVDF (A-1) was less than 30 parts by mass, to the total of 100 parts by mass of PVDF (A-1) and resin (B), the obtained coating film was insufficient in weather resistance. In Ex. 5 using a powder coating material made from a composition for powder coating material containing PVDF (Z-1) having a heterologous sequence ratio exceeding 37%, the obtained coating film was insufficient in weather resistance. In Ex. 6 using a powder coating material made from a composition for powder coating material containing PVDF (Z-2) having a melting point exceeding 170°C, even if the heterologous sequence ratio was from 11 to 37%, the obtained coating film was insufficient in bending processability.

[Ex. 7]

An aluminum plate with a coating film was obtained in the same manner as in Ex. 1 except that using, instead of the aluminum plate subjected to chromate treatment, an aluminum plate treated with a chemical conversion treatment agent containing no chromium (VI), manufactured by Henkel (trade name: "Alodine 5200"), an epoxy resin manufactured by Pelnox Ltd. (trade name: "Pel Powder PCE-900") was electrostatically coated as a primer in a thickness of 30 $\mu$m, and then, the powder coating material obtained in Ex. 1 was electrostatically coated.

[Ex. 8]

An aluminum plate with a coating film was obtained in the same manner as in Ex.7 except that no epoxy resin powder coating material manufactured by Pelnox Ltd. was used as a primer.

Using the aluminum plate with a coating film obtained in each of Ex. 1, Ex. 7 and Ex. 8, as a test piece, evaluations of corrosion resistance and weather resistance were conducted. The results are shown in Table 3.

<Corrosion resistance (neutral salt spray resistance)>

In accordance with JIS K 5600-7-1 (1999), corrosion resistance of the aluminum plate was evaluated by the following standards.
○ (Good): At a cross-cut portion of the coating film, occurrence of swelling of the coating film or white rust of aluminum is not observed.
× (Bad): At a cross-cut portion of the coating film, occurrence of swelling of the coating film or white rust of aluminum is observed.

[Table 3]

|  | Ex. 1 | Ex. 7 | Ex. 8 |
|---|---|---|---|
| Corrosion resistance | ○ | ○ | × |
| Weather resistance | ○ | ○ | × |

In Table 3, it was confirmed that even though the aluminum plate in Ex. 7 was one treated with a chemical conversion treatment agent containing no chromium, as it was provided with a primer layer, it was excellent in corrosion resistance similar to the aluminum plate subjected to chromate chemical conversion treatment in Ex. 1. On the other hand, it was confirmed that in Ex. 8 having no primer layer, even an aluminum plate subjected to chromium-free chemical conversion treatment was insufficient in corrosion resistance against e.g. swelling of the cross-cut portion or rust.
The powder coating material of the present invention is useful for forming a coating film on e.g. a signal machine, a telephone pole, a road sign pole, a bridge, a railing, a building material (gate, fence, siding material for a house, a curtain wall, a roof, etc.), a car body or parts (bumper, wiper blade, etc.), a household appliance (outdoor unit of air conditioner, water heater exterior, etc.), blades for wind power generator, a solar cell back sheet, a back surface of a heat collection mirror for solar power generator, a surface of eggplant battery exterior, etc.

## Claims

1. A composition for powder coating material comprising the following polyvinylidene fluoride (A) and at least one resin (B) selected from the group consisting of an acrylic resin, a polyester resin and an epoxy resin, wherein the content of the following polyvinylidene fluoride (A) is from 30 to 90 parts by mass in the total of 100 parts by mass of the polyvinylidene fluoride (A) and the resin (B):
   Polyvinylidene fluoride (A): a polyvinylidene fluoride, which is a homopolymer of vinylidene fluoride, and having a melting point of from 152 to 170°C, a crystallinity of from 10 to 35%, wherein the difference between crystallinity during quenching and crystallinity during annealing is at most 3%, as determined by the following method, and a heterologous sequence ratio of from 11 to 37% as determined by the following method:
   (Method for determining heterologous sequence ratio)
   $^{19}$F-NMR of the polyvinylidene fluoride is measured by using deuterated N,N-dimethylformamide as a solvent and $CFCl_3$ as an internal standard, to obtain a spectrum, and the heterologous sequence ratio is calculated by the following formula (1) from the integral value ($I_1$) of signals derived from regular sequence appearing in the vicinity of -85 to -98 ppm in the obtained spectrum and the integral value ($I_2$) of signals derived from heterologous sequence appearing in the vicinity of -113 to -120 ppm in the spectrum:

$$\text{Heterologous sequence ratio (\%)} = \{I_2/(I_1 + I_2)\} \times 100 \qquad (1)$$

   (Method for determining crystallinity)
   the crystallinity of the polyvinylidene fluoride is calculated by the following formula (2) from the heat of fusion $M_1$ (J/g) and heat of fusion $M_2$ of a perfect crystal of polyvinylidene fluoride, wherein the heat of fusion $M_1$ is calculated from an area of the endothermic peak of a chart obtained by measuring the heat balance in a temperature range of from -25 to 200°C at a temperature raising rate of 10°C/min using a differential scanning calorimeter and the amount of the sample, and wherein the heat of fusion $M_2$ is 104.5 J/g:

$$\text{Crystallinity (\%)} = (M_1/M_2) \times 100 \qquad (2)$$

wherein for the crystallinity during quenching, the sample is completely dissolved at 300°C, then cooled from 300°C to room temperature at a cooling rate of 10°C/min for re-crystallization, and then heated from room temperature to 200°C at a temperature raising rate of 10°C /min, and wherein the crystallinity during annealing is calculated in the same manner as the crystallinity during quenching, except that the cooling rate as a re-crystallization condition is changed to 0.5°C/min.

2. The composition for powder coating material according to Claim 1, wherein resin components contained in the composition for powder coating material consist solely of the polyvinylidene fluoride (A) and the resin (B).

3. The composition for powder coating material according to Claim 1 or 2, which further contains a pigment.

4. A powder coating material comprising a powder composed of the composition for powder coating material as defined in any one of Claims 1 to 3.

5. A powder coating material comprising a first powder composed of the composition for powder coating material as defined in any one of Claims 1 to 3, and a second powder composed of a composition for powder coating material which contains at least one resin (C) selected from the group consisting of an acrylic resin, a polyester resin, an urethane resin, an epoxy resin and a silicone resin and which contains no fluororesin.

6. The powder coating material according to Claim 5, wherein the mixing ratio of the first powder to the second powder (i.e. the first powder/the second powder) is from 10/90 to 90/10 (mass ratio).

7. A coated article having a coating film formed of the powder coating material as defined in any one of Claims 4 to 6, on the surface of a substrate.

8. The coated article according to Claim 7, wherein the material for the substrate is aluminum or aluminum alloy having surface-treated with a chemical conversion treatment agent.

9. The coated article according to Claim 8, wherein the chemical conversion treatment agent is a zirconium-type treatment agent or a titanium-type treatment agent, which does not contain chromium.

10. The coated article according to Claim 7, which further has, between the surface of the substrate and the coating film formed of the powder coating material, a primer layer composed of at least one primer selected from the group consisting of an acrylic resin, a polyester resin and an epoxy resin.

**Patentansprüche**

1. Zusammensetzung für einen Pulverlack, umfassend das folgende Polyvinylidenfluorid (A) und mindestens ein Harz (B), ausgewählt aus der Gruppe, bestehend aus einem Acrylharz, einem Polyesterharz und einem Epoxidharz, wobei der Gehalt des folgenden Polyvinylidenfluorids (A) 30 bis 90 Massenteile in der Gesamtheit von 100 Massenteilen des Polyvinylidenfluorids (A) und des Harzes (B) beträgt:
Polyvinylidenfluorid (A): ein Polyvinylidenfluorid, welches ein Homopolymer von Vinylidenfluorid ist, und das einen Schmelzpunkt von 152 bis 170°C, eine Kristallinität von 10 bis 35%, wobei der Unterschied zwischen der Kristallinität während des Abschreckens und der Kristallinität während des Temperns höchstens 3% beträgt, wie durch das folgende Verfahren bestimmt, und ein heterologes Sequenzverhältnis von 11 bis 37% aufweist, wie durch das folgende Verfahren bestimmt:
(Verfahren zur Bestimmung des heterologen Sequenzverhältnisses)
$^{19}$F-NMR des Polyvinylidenfluorids wird unter Verwendung von deuteriertem N, N-Dimethylformamid als ein Lösungsmittel und $CFCl_3$ als internem Standard gemessen, um ein Spektrum zu erhalten, und das heterologe Sequenzverhältnis wird durch die folgende Formel (1) aus dem Integralwert ($I_1$) von Signalen, die von einer regulären Sequenz stammen, die in dem erhaltenen Spektrum in der Nähe von -85 bis -98 ppm erscheinen, und dem Integralwert ($I_2$) von Signalen, die von einer heterologen Sequenz stammen, die dem Spektrum in der Nähe von -113 bis -120 ppm erscheinen, berechnet:

$$\text{Heterologes Sequenzverhältnis (\%)} = \{I_2/(I_1 + I_2)\} \times 100 \qquad (1)$$

(Verfahren zur Bestimmung der Kristallinität)
die Kristallinität des Polyvinylidenfluorids wird durch die folgende Formel (2) aus der Schmelzwärme $M_1$ (J/g) und Schmelzwärme $M_2$ eines perfekten Polyvinylidenfluoridkristalls berechnet, wobei die Schmelzwärme $M_1$ aus einer Fläche des endothermen Peaks eines Diagramms berechnet wird, das durch Messen der Wärmebilanz in einem Temperaturbereich von -25 bis 200°C bei einer Temperaturerhöhungsrate von 10°C/min unter Verwendung eines Differentialscanningkalorimeters und der Probenmenge erhalten wird, und wobei die Schmelzwärme $M_2$ 104,5 J/g beträgt:

$$\text{Kristallinität (\%)} = (M_1/M_2) \times 100 \qquad (2)$$

wobei für die Kristallinität während des Abschreckens die Probe bei 300°C vollständig aufgelöst wird, anschließend von 300°C auf Raumtemperatur bei einer Abkühlgeschwindigkeit von 10°C/min zur Rekristallisation abgekühlt wird und anschließend von Raumtemperatur auf 200°C bei einer Temperaturerhöhungsrate von 10°C/min erwärmt wird, und wobei die Kristallinität während des Temperns auf dieselbe Weise wie die Kristallinität während des Abschreckens berechnet wird, mit der Ausnahme, dass die Abkühlgeschwindigkeit als eine Rekristallisationsbedingung auf 0,5°C/min geändert wird.

2. Zusammensetzung für einen Pulverlack nach Anspruch 1, wobei die in der Zusammensetzung für einen Pulverlack enthaltenen Harzkomponenten nur aus dem Polyvinylidenfluorid (A) und dem Harz (B) bestehen.

3. Zusammensetzung für einen Pulverlack nach Anspruch 1 oder 2, welche ferner ein Pigment enthält.

4. Pulverlack, umfassend ein Pulver, zusammengesetzt aus der Zusammensetzung für einen Pulverlack, wie in einem der Ansprüche 1 bis 3 definiert.

5. Pulverlack, umfassend ein erstes Pulver, zusammengesetzt aus der Zusammensetzung für einen Pulverlack, wie in einem der Ansprüche 1 bis 3 definiert, und einem zweiten Pulver, zusammengesetzt aus einer Zusammensetzung für einen Pulverlack, welche mindestens ein Harz (C) enthält, ausgewählt aus die Gruppe, bestehend aus einem Acrylharz, einem Polyesterharz, einem Urethanharz, einem Epoxidharz und einem Silikonharz, und welches kein Fluorharz enthält.

6. Pulverlack nach Anspruch 5, wobei das Mischungsverhältnis des ersten Pulvers zu dem zweiten Pulver (d.h. das erste Pulver/das zweite Pulver) 10/90 bis 90/10 (Massenverhältnis) beträgt.

7. Beschichteter Gegenstand mit einem Beschichtungsfilm, der aus dem Pulverlack, wie in einem der Ansprüche 4 bis 6 definiert, auf der Oberfläche eines Substrats gebildet ist.

8. Beschichteter Gegenstand nach Anspruch 7, wobei das Material für das Substrat Aluminium oder Aluminiumlegierung ist, das mit einem chemischen Umwandlungsbehandlungsmittel oberflächenbehandelt ist.

9. Beschichteter Gegenstand nach Anspruch 8, wobei das chemische Umwandlungsbehandlungsmittel ein Behandlungsmittel vom Zirkontyp oder ein Behandlungsmittel vom Titantyp ist, das kein Chrom enthält.

10. Beschichteter Gegenstand nach Anspruch 7, der ferner zwischen der Oberfläche des Substrats und dem aus dem Pulverlack gebildeten Beschichtungsfilm eine Grundierungsschicht aufweist, zusammengesetzt aus mindestens einer Grundierung, ausgewählt aus der Gruppe, bestehend aus einem Acrylharz, einem Polyesterharz und einem Epoxidharz.

**Revendications**

1. Composition pour matériau de revêtement en poudre comprenant le poly(fluorure de vinylidène) (A) suivant et au moins une résine (B) choisie parmi le groupe consistant en une résine acrylique, une résine de polyester et une résine époxy, où la teneur en le poly(fluorure de vinylidène) (A) suivant se situe dans l'intervalle allant de 30 à 90 parties en masse de la totalité des 100 parties en masse du poly(fluorure de vinylidène) (A) et de la résine (B) : poly(fluorure de vinylidène) (A) : un poly(fluorure de vinylidène) qui est un homopolymère de fluorure de vinylidène, ayant un point de fusion allant de 152 à 170°C, une cristallinité allant de 10 à 35%, où la différence entre la cristallinité pendant la trempe et la cristallinité pendant le recuit est d'au plus 3%, déterminé par le procédé suivant, et un rapport de séquence hétérologue allant de 11 à 37% déterminé par le procédé suivant :

(Procédé de détermination du rapport de séquence hétérologue)

la RMN $^{19}$F du poly(fluorure de vinylidène) est rmesurée en utilisant du N,N-diméthyl-formamide deutéré comme solvant et du $CFCl_3$ comme standard interne, pour obtenir un spectre, et le rapport de séquence hétérologue est calculé au moyen de la formule (1) suivante à partir de la valeur intégrée ($I_1$) des signaux dérivés de la séquence régulière apparaissant au voisinage de -85 à -95 ppm dans le spectre obtenu et de la valeur intégrée ($I_2$) des signaux dérivés de la séquence hétérologue apparaissant au voisinage de -113 à -120 ppm dans le spectre :

$$\text{Rapport de séquence hétérologue (\%)} = \{I_2/(I_1+I_2)\} \times 100 \quad (1)$$

(Procédé de détermination de la cristallinité)

la cristallinité du poly(fluorure de vinylidène) est calculée au moyen de la formule (2) suivante à partir de la chaleur de fusion $M_1$ (J/g) et de la chaleur de fusion $M_2$ d'un cristal parfait de poly(fluorure de vinylidène), où la chaleur de fusion $M_1$ est calculée dans une zone de pic endothermique d'un graphique obtenu par mesure de l'équilibre thermique dans une plage de température allant de -25 à 200°C à une vitesse d'élévation de la température de 10°C/minute au moyen d'un calorimètre différentiel à balayage, et la quantité de l'échantillon, et où la chaleur de fusion $M_2$ est 104,5 J/g :

$$\text{Cristallinité (\%)} = (M_1/M_2) \times 100 \quad (2)$$

où pour la cristallinité pendant la trempe, l'échantillon est complètement dissous à 300°C, puis refroidi de 300°C à la température ambiante à une vitesse de refroidissement de 10°C/minute pendant la recristallisation, puis chauffé de la température ambiante à 200°C à une vitesse d'élévation de la température de 10°C/minute, et où la cristallinité pendant le recuit est calculée de la même manière que la cristallinité pendant la trempe, excepté que la vitesse de refroidissement comme condition de recristallisation est de 0,5°C/minute.

2. Composition pour matériau de revêtement en poudre selon la revendication 1, où les composants résine présents dans la composition de matériau de revêtement en poudre consistent uniquement en le poly(fluorure de vinylidène) (A) et la résine (B).

3. Composition pour matériau de revêtement en poudre selon la revendication 1 ou 2, qui contient en outre, un pigment.

4. Matériau de revêtement en poudre comprenant une poudre composée de la composition pour matériau de revêtement en poudre telle que définie dans l'une quelconque des revendications 1 à 3.

5. Matériau de revêtement en poudre comprenant une première poudre composée de la composition pour matériau de revêtement en poudre telle que définie dans l'une quelconque des revendications 1 à 3, et une deuxième poudre composée d'une composition pour matériau de revêtement en poudre, qui contient au moins une résine (C) choisie parmi le groupe consistant en une résine acrylique, une résine polyester, une résine uréthanne, une résine époxy et une résine silicone et qui ne contient pas de fluororésine.

6. Matériau de revêtement en poudre selon la revendication 5, où le rapport de mélange de la première poudre à la deuxième poudre (à savoir, première poudre/deuxième poudre) se situe dans l'intervalle allant de 10/90 à 90/10 (rapport massique).

7. Article revêtu ayant un film de revêtement formé du matériau de revêtement en poudre tel que défini dans l'une quelconque des revendications 4 à 6, sur la surface du substrat.

8. Article revêtu selon la revendication 7, où le matériau du substrat est l'aluminium ou un alliage d'aluminium dont la surface a été traitée par un agent de traitement par conversion chimique.

9. Article revêtu selon la revendication 8, où l'agent de traitement par conversion chimique est un agent de traitement de type zirconium ou un agent de traitement de type titane, qui ne contient pas de chrome.

10. Article revêtu selon la revendication 7, qui comporte en outre, entre la surface du substrat et le film de revêtement formé du matériau de revêtement en poudre, une couche primaire composée d'au moins un primaire choisi parmi le groupe consistant en une résine acrylique, une résine polyester et une résine époxy.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9165535 A
- EP 0869157 A1
- GB 2262100 A
- US 5030394 A
- EP 0960918 A2
- US 6506843 B1
- JP 2011012119 A
- WO 2014002964 A1
- WO 2007119850 A1
- WO 2013008885 A1
- JP 8512174 A

**Non-patent literature cited in the description**

- **J. WU et al.** *Polymer,* 2014, vol. 55 (16), 3557-3563
- *EXPRESS Polymer Letters,* 2010, vol. 4 (5), 284-291